# EUROPEAN PATENT APPLICATION

(11) **EP 4 498 746 A1**
(43) Date of publication of application: **29.01.2025**
(21) Application number: 23794801.3
(22) Date of filing: 10.03.2023
(51) Int. Cl.: H04W 72/04

(54) **TIMING ADVANCE REPORT SENDING METHOD AND APPARATUS**

(30) Priority: 24.04.2022 CN 202210435718
(71) Applicant: Huawei Technologies Co., Ltd., Shenzhen, Guangdong 518129 (CN)
(72) Inventor: XU, Bin, Shenzhen, Guangdong 518129 (CN); ZHENG, Lili, Shenzhen, Guangdong 518129 (CN)
(74) Representative: Goddar, Heinz J.
(86) International application number: PCT/CN2023/080839
(87) International publication number: WO 2023/207365

(57) **Abstract**

A timing advance report sending method and an apparatus are provided, and relate to the field of communication technologies, to improve reliability of timing advance reporting and assist in network device scheduling. The method may include: A terminal device determines whether an available first resource is present, where the available first resource is associated with a hybrid automatic repeat request HARQ process configured with a HARQ mode A, and the HARQ mode A supports retransmission. When the available first resource is present, the terminal device sends a timing advance report to a network device by using the available first resource.

## Description

This application claims priority to Chinese Patent Application No. 202210435718.8, filed with the China National Intellectual Property Administration on April 24, 2022 and entitled "TIMING ADVANCE REPORT SENDING METHOD AND APPARATUS", which is incorporated herein by reference in its entirety.

### TECHNICAL FIELD

This application relates to the field of communication technologies, and in particular, to a timing advance report sending method and an apparatus.

### BACKGROUND

In a wireless communication system, a hybrid automatic repeat request (hybrid automatic repeat request, HARQ) mechanism may be used for data transmission between a terminal device and a network device. Specifically, a data packet may be associated with one HARQ process during transmission, and transmission between different HARQ processes is independent of each other. Each uplink HARQ process may be configured with a HARQ mode A, a HARQ mode B, or no HARQ mode based on an actual situation. When the HARQ mode A or no HARQ mode is configured, the HARQ process supports uplink HARQ retransmission. When the HARQ mode B is configured, the HARQ process does not support uplink HARQ retransmission. Each downlink HARQ process may be configured with downlink HARQ feedback enabling or disabling based on an actual situation.

To enable the network device to obtain a timing advance (timing advance, TA) of the terminal device in time, the terminal device may determine a latest TA based on location information of the terminal device and the network device, and report the latest TA to the network device. The network device may determine a transmission delay between the terminal device and the network device based on the TA reported by the terminal device, to improve scheduling efficiency.

Because TA reporting is very important for scheduling, how to ensure reliability of obtaining the TA by the network device is a problem that needs to be urgently resolved.

### SUMMARY

Embodiments of this application provide a timing advance report sending method and an apparatus, to improve reliability of timing advance reporting and assist network device scheduling.

According to a first aspect, an embodiment of this application provides a timing advance report sending method. The method may include: A terminal device determines whether an available first resource is present. When the available first resource is present, the terminal device sends a timing advance report to a network device by using the available first resource. The available first resource is associated with a HARQ process configured with a HARQ mode A, and the HARQ mode A supports retransmission.

Based on the first aspect, the terminal device may send the timing advance report to the network device by using the available first resource associated with the HARQ process configured with the HARQ mode A. When the available first resource is absent, the terminal device sends no timing advance report to the network device, to avoid a case that the terminal device unsuccessfully sends the timing advance report by using an uplink resource associated with a HARQ process configured with a HARQ mode B, and avoid affecting network scheduling. In addition, because the HARQ mode A supports retransmission, when the terminal device unsuccessfully sends the timing advance report by using the available first resource, the terminal device may retransmit the timing advance report to the network device, so that the network device can receive the timing advance report sent by the terminal device, to improve reliability of timing advance reporting and assist network device scheduling.

In a possible design, the available first resource is greater than or equal to a resource occupied by the timing advance report and a packet header of the timing advance report.

Based on the possible design, when the terminal device determines the available first resource, it should be ensured that the available first resource is greater than or equal to the resource occupied by the timing advance report and the packet header of the timing advance report, to ensure that the terminal device can send a timing advance report by using the available first resource.

In a possible design, when an available uplink resource is absent, the terminal device determines that the available first resource is absent.

In a possible design, when an uplink resource associated with the HARQ process configured with the HARQ mode A is absent, the terminal device determines that the available first resource is absent.

In a possible design, when an uplink resource associated with the HARQ process configured with the HARQ mode A is present, but the uplink resource is less than the resource occupied by the timing advance report and the packet header of the timing advance report, the terminal device determines that the available first resource is absent.

Based on the foregoing three possible designs, a plurality of feasible solutions are provided for the terminal device to determine that the available first resource is absent.

In a possible design, when the available first resource is absent, the terminal device sends first indication information to the network device, where the first indication information is used to request an uplink resource, the first indication information indicates that a to-be-reported timing advance is present, or the first indication information is used to request an uplink resource associated with the HARQ process configured with the HARQ mode A.

Based on the possible design, when the terminal device determines that the available first resource is absent, the terminal device may send the first indication information to the network device. The network device may allocate an uplink resource or a first resource to the terminal device based on the first indication information. The terminal device may determine whether the uplink resource or the first resource allocated by the network device is an available first resource. If the uplink resource or the first resource is the available first resource, the terminal device may send the timing advance report to the network device by using the available first resource, to improve a success rate of timing advance reporting and assist network device scheduling.

In a possible design, when the available first resource is absent, and a function of sending the first indication information is configured as enabled, the terminal device sends the first indication information to the network device.

Based on the possible design, after determining that the available first resource is absent, the terminal device may determine whether the function of sending the first indication information is configured as enabled. If the function is configured as enabled, the terminal device may send the first indication information to the network device. This provides a feasible solution for sending of the first indication information.

In a possible design, the first indication information is a scheduling request or physical uplink control channel PUCCH signaling.

Based on the possible design, a plurality of feasible solutions are provided for designing of the first indication information.

In a possible design, when the available first resource is absent, the terminal device sends second indication information to the network device, where the second indication information indicates a reason why the available first resource is absent. The reason why the available first resource is absent includes one or more of the following: An available uplink resource is absent, an uplink resource associated with the HARQ process configured with the HARQ mode A is absent, or an uplink resource associated with the HARQ process configured with the HARQ mode A is present, but the uplink resource is less than the resource occupied by the timing advance report and the packet header of the timing advance report.

Based on the possible design, when the available first resource is absent, the terminal device may further send the second indication information to the network device, so that the network device properly allocates the uplink resource to the terminal device based on the reason why the available first resource is absent and that is indicated by the second indication information.

In a possible design, the terminal device obtains the available first resource allocated by the network device, and sends the timing advance report to the network device by using the available first resource.

Based on the possible design, when the terminal device sends the first indication information to the network device, the network device may allocate the available first resource to the terminal device, so that the terminal device can promptly send the timing advance report to the network device by using the available first resource, to improve a success rate of timing advance reporting and assist network device scheduling.

In a possible design, after the terminal device sends the timing advance report to the network device by using the available first resource, the terminal device cancels the to-be-reported timing advance when any one of the following conditions is met: The terminal device sends the timing advance report to the network device by using the available first resource; the terminal device receives acknowledgment information from the network device, where the acknowledgment information is used to acknowledge the timing advance report; the terminal device receives third indication information from the network device, where the third indication information indicates to adjust a scheduling parameter; or the terminal device receives the third indication information from the network device within preset duration.

Based on the possible design, after the terminal device sends the timing advance report to the network device by using the available first resource, the terminal device may further cancel the to-be-reported timing advance when any one of the foregoing conditions is met, to avoid resource waste caused when the timing advance report is repeatedly sent.

According to a second aspect, an embodiment of this application provides a communication apparatus. The communication apparatus may implement functions performed by the terminal device in the first aspect or the possible designs of the first aspect, and the functions may be implemented by hardware executing corresponding software. The hardware or software includes one or more modules corresponding to the functions, for example, a transceiver module and a processing module. The processing module is configured to determine whether an available first resource is present. The transceiver module is configured to: when the available first resource is present, send a timing advance report to a network device by using the available first resource. The available first resource is associated with a HARQ process configured with a HARQ mode A, and the HARQ mode A supports retransmission.

In a possible design, the available first resource is greater than or equal to a resource occupied by the timing advance report and a packet header of the timing advance report.

In a possible design, when an available uplink resource is absent, the processing module determines that the available first resource is absent.

In a possible design, when an uplink resource associated with the HARQ process configured with the HARQ mode A is absent, the processing module determines that the available first resource is absent.

In a possible design, an uplink resource associated with the HARQ process configured with the HARQ mode A is present, but the uplink resource is less than the resource occupied by the timing advance report and the packet header of the timing advance report, the processing module determines that the available first resource is absent.

In a possible design, the transceiver module is further configured to: when the available first resource is absent, send first indication information to the network device, where the first indication information is used to request an uplink resource, the first indication information indicates that a to-be-reported timing advance is present, or the first indication information is used to request an uplink resource associated with the HARQ process configured with the HARQ mode A.

In a possible design, the transceiver module is further configured to: when the available first resource is absent, and a function of sending the first indication information is configured as enabled, send the first indication information to the network device.

In a possible design, the first indication information is a scheduling request or physical uplink control channel PUCCH signaling.

In a possible design, the transceiver module is further configured to: when the available first resource is absent, send second indication information to the network device, where the second indication information indicates a reason why the available first resource is absent. The reason why the available first resource is absent includes one or more of the following: An available uplink resource is absent, an uplink resource associated with the HARQ process configured with the HARQ mode A is absent, or an uplink resource associated with the HARQ process configured with the HARQ mode A is present, but the uplink resource is less than the resource occupied by the timing advance report and the packet header of the timing advance report.

In a possible design, the transceiver module is further configured to: obtain the available first resource allocated by the network device, and send the timing advance report to the network device by using the available first resource.

In a possible design, the processing module is further configured to: after the transceiver module sends the timing advance report to the network device by using the available first resource, cancel the to-be-reported timing advance when any one of the following conditions is met: The transceiver module sends the timing advance report to the network device by using the available first resource; the transceiver module receives acknowledgment information from the network device, where the acknowledgment information is used to acknowledge the timing advance report; the transceiver module receives third indication information from the network device, where the third indication information indicates to adjust a scheduling parameter; or the transceiver module receives the third indication information from the network device within preset duration.

It should be noted that for a specific implementation of the communication apparatus in the second aspect, refer to a behavior function of the terminal device in the timing advance report sending method provided in any one of the first aspect or the possible designs of the first aspect.

According to a third aspect, an embodiment of this application provides a communication apparatus. The communication apparatus may be a terminal device, or a chip or a system-on-a-chip in the terminal device. The communication apparatus may implement functions performed by the terminal device in the foregoing aspects or the possible designs, and the functions may be implemented by hardware. In a possible design, the communication apparatus may include a transceiver and a processor. The transceiver and the processor may be configured to support the communication apparatus in implementing the function in any one of the first aspect or the possible designs of the first aspect. For example, the processor may be configured to determine whether an available first resource is present. The transceiver may be configured to: when the available first resource is present, send a timing advance report to a network device by using the available first resource. The available first resource is associated with a HARQ process configured with a HARQ mode A, and the HARQ mode A supports retransmission. In another possible design, the communication apparatus may further include a memory. The memory is configured to store computer-executable instructions and data of the communication apparatus. When the communication apparatus runs, the transceiver and the processor execute the computer-executable instructions stored in the memory, to enable the communication apparatus to perform the timing advance report sending method according to any one of the first aspect or the possible designs of the first aspect.

For a specific implementation of the communication apparatus in the third aspect, refer to a behavior function of the terminal device in the timing advance report sending method provided in any one of the first aspect or the possible designs of the first aspect.

According to a fourth aspect, an embodiment of this application provides a timing advance report sending method. The method may include: A network device receives first indication information from a terminal device, where the first indication information indicates that a to-be-reported timing advance is present. The network device sends, to the terminal device, information indicating a first resource, where the first resource is associated with a hybrid automatic repeat request HARQ process configured with a HARQ mode A, and the HARQ mode A supports retransmission.

Based on the fourth aspect, when the terminal device determines that an available first resource is absent, the terminal device may send, to the network device, the first indication information indicating that the to-be-reported timing advance is present. The network device may allocate the first resource to the terminal device based on the first indication information, so that the terminal device can promptly send a timing advance report to the network device by using the first resource, to improve a success rate of timing advance reporting and assist network device scheduling.

In a possible design, the network device receives the timing advance report from the terminal device by using the first resource.

Based on the possible design, after the network device allocates the first resource to the terminal device based on the first indication information, the network device may receive, by using the first resource, the timing advance report sent by the terminal device. This provides a feasible solution for the network device to receive the timing advance report.

In a possible design, the first resource is greater than or equal to a resource occupied by the timing advance report and a packet header of the timing advance report.

Based on the possible design, when the network device allocates the first resource to the terminal device, it can be ensured that the allocated first resource is greater than or equal to the resource occupied by the timing advance report and the packet header of the timing advance report, to ensure that the terminal device can send the timing advance by using the first resource.

In a possible design, the first indication information is a scheduling request or physical uplink control channel PUCCH signaling.

Based on the possible design, a plurality of feasible solutions are provided for designing of the first indication information.

In a possible design, the network device receives second indication information from the terminal device, where the second indication information indicates a reason why the available first resource is absent. The reason why the available first resource is absent includes one or more of the following: An available uplink resource is absent, an uplink resource associated with the HARQ process configured with the HARQ mode A is absent, or an uplink resource associated with the HARQ process configured with the HARQ mode A is present, but the uplink resource is less than the resource occupied by the timing advance report and the packet header of the timing advance report.

Based on the possible design, when the available first resource is absent, the terminal device may further send the second indication information to the network device, so that the network device properly allocates the uplink resource to the terminal device based on the reason why the available first resource is absent and that is indicated by the second indication information.

According to a fifth aspect, an embodiment of this application provides a communication apparatus. The communication apparatus may implement functions performed by the network device in the fourth aspect or the possible designs of the fourth aspect, and the functions may be implemented by hardware executing corresponding software. The hardware or software includes one or more modules corresponding to the functions, for example, a transceiver module and a processing module. The transceiver module is configured to receive first indication information from a terminal device, where the first indication information indicates that a to-be-reported timing advance is present. The transceiver module is further configured to send, to the terminal device, information indicating a first resource, where the first resource is associated with a hybrid automatic repeat request HARQ process configured with a HARQ mode A, and the HARQ mode A supports retransmission.

In a possible design, the transceiver module is further configured to receive a timing advance report from the terminal device by using the first resource.

In a possible design, the first resource is greater than or equal to a resource occupied by the timing advance report and a packet header of the timing advance report.

In a possible design, the first indication information is a scheduling request or physical uplink control channel PUCCH signaling.

In a possible design, the transceiver module is further configured to receive second indication information from the terminal device, where the second indication information indicates a reason why an available first resource is absent. The reason why the available first resource is absent includes one or more of the following: An available uplink resource is absent, an uplink resource associated with the HARQ process configured with the HARQ mode A is absent, or an uplink resource associated with the HARQ process configured with the HARQ mode A is present, but the uplink resource is less than the resource occupied by the timing advance report and the packet header of the timing advance report.

It should be noted that for a specific implementation of the communication apparatus in the fifth aspect, refer to a behavior function of the network device in the timing advance report sending method provided in any one of the fourth aspect or the possible designs of the fourth aspect.

According to a sixth aspect, an embodiment of this application provides a communication apparatus. The communication apparatus may be a chip or a system-on-a-chip in a network device. The communication apparatus may implement functions performed by the network device in the foregoing aspects or the possible designs, and the functions may be implemented by hardware. In a possible design, the communication apparatus may include a transceiver and a processor. The transceiver and the processor may be configured to support the communication apparatus in implementing the function in any one of the fourth aspect or the possible designs of the fourth aspect. For example, the transceiver may be configured to receive first indication information from a terminal device, where the first indication information indicates that a to-be-reported timing advance is present. The transceiver may be further configured to send, to the terminal device, information indicating a first resource, where the first resource is associated with a hybrid automatic repeat request HARQ process configured with a HARQ mode A, and the HARQ mode A supports retransmission. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory, to enable the communication apparatus to perform the timing advance report sending method according to any one of the fourth aspect or the possible designs of the fourth aspect.

For a specific implementation of the communication apparatus in the sixth aspect, refer to a behavior function of the network device in the timing advance report sending method provided in any one of the fourth aspect or the possible designs of the fourth aspect.

According to a seventh aspect, an embodiment of this application provides a timing advance report sending method. The method may include: A terminal device sends a timing advance report to a network device by using an uplink resource. When a hybrid automatic repeat request HARQ process associated with the uplink resource is configured with a HARQ mode B, after the terminal device sends the timing advance report, a to-be-reported timing advance is not canceled. The HARQ mode B does not support retransmission.

Based on the seventh aspect, when the terminal device sends the timing advance report to the network device by using the uplink resource associated with the HARQ process configured with the HARQ mode B, because the HARQ mode B does not support retransmission, after the terminal device sends the timing advance report to the network device by using the uplink resource associated with the HARQ process configured with the HARQ mode B, the to-be-reported timing advance may not be canceled. In this case, when an uplink resource that can be used to transmit the timing advance report is present subsequently, the timing advance report is sent to the network device by using the uplink resource, to improve reliability of timing advance reporting.

In a possible design, when the HARQ process associated with the uplink resource is configured with a HARQ mode A, after the terminal device sends the timing advance report, the to-be-reported timing advance is canceled. The HARQ mode A supports retransmission.

Based on the possible design, when the terminal device sends the timing advance report to the network device by using the uplink resource associated with the HARQ process configured with the HARQ mode A, because the HARQ mode A supports retransmission, when the network device unsuccessfully receives the timing advance report, the terminal device may retransmit the timing advance report to the network device. Therefore, after sending the timing advance report to the network device by using the uplink resource associated with the HARQ process configured with the HARQ mode A, the terminal device may cancel the to-be-reported timing advance, to avoid resource waste caused when the timing advance report is repeatedly sent.

In a possible design, when the HARQ process associated with the uplink resource is configured with the HARQ mode B, the terminal device receives fourth indication information from the network device, and cancels the to-be-reported timing advance based on the fourth indication information. The fourth indication information indicates to cancel the to-be-reported timing advance.

Based on the possible design, for a case that the terminal device sends the timing advance report to the network device by using the uplink resource associated with the HARQ process configured with the HARQ mode B, because the terminal device does not cancel the to-be-reported timing advance for a reason why when an uplink resource that may be used to transmit the timing advance report is present subsequently, the terminal device may continue to send the timing advance report to the network device by using the uplink resource, to improve reliability of timing advance reporting. Therefore, if the network device receives the timing advance report sent by the terminal device, the network device may send the fourth indication information to the terminal device, to indicate the terminal device to cancel the to-be-reported timing advance. The terminal device may cancel the to-be-reported timing advance based on the fourth indication information sent by the network device.

In a possible design, the fourth indication information is one or more of the following: downlink control information DCI, a media access control control element MAC CE, or radio resource control RRC signaling.

Based on the possible design, a plurality of feasible solutions are provided for designing of the fourth indication information.

In a possible design, when the HARQ process associated with the uplink resource is configured with the HARQ mode A, the terminal device cancels the to-be-reported timing advance when any one of the following conditions is met: The terminal device sends the timing advance report to the network device by using the uplink resource; or, the terminal device receives acknowledgment information from the network device. The acknowledgment information is used to acknowledge the timing advance report.

Based on the possible design, when the terminal device sends the timing advance report to the network device by using the uplink resource associated with the HARQ process configured with the HARQ mode A, after sending the timing advance report, the terminal device directly cancels the to-be-reported timing advance, or may cancel the to-be-reported timing advance based on the acknowledgment information sent by the network device. This provides a plurality of feasible solutions for the terminal device to cancel the to-be-reported timing advance.

In a possible design, the terminal device receives third indication information from the network device, and cancels the to-be-reported timing advance based on the third indication information. Alternatively, the terminal device receives the third indication information from the network device within preset duration, and cancels the to-be-reported timing advance based on the third indication information. The third indication information indicates to adjust a scheduling parameter.

Based on the possible design, because the terminal device sends the timing advance report to the network device to assist the network device in adjusting the scheduling parameter, regardless of the terminal device sending the timing advance report to the network device by using either the uplink resource associated with the HARQ process configured with the HARQ mode A or the uplink resource associated with the HARQ process configured with the HARQ mode B, when the terminal device receives the third indication information that indicates to adjust the scheduling parameter and that is sent by the network device, the terminal device may consider that the network device has received the timing advance report sent by the terminal device. In this case, the terminal device may cancel the to-be-reported timing advance.

According to an eighth aspect, an embodiment of this application provides a communication apparatus. The communication apparatus may implement functions performed by the terminal device in the seventh aspect or the possible designs of the seventh aspect, and the functions may be implemented by hardware executing corresponding software. The hardware or software includes one or more modules corresponding to the functions, for example, a transceiver module and a processing module. The transceiver module is configured to send a timing advance report to a network device by using an uplink resource. The processing module is configured to: when a hybrid automatic repeat request HARQ process associated with the uplink resource is configured with a HARQ mode B, after the transceiver module sends the timing advance report, skip cancelling a to-be-reported timing advance. The HARQ mode B does not support retransmission.

In a possible design, the processing module is further configured to: when the HARQ process associated with the uplink resource is configured with a HARQ mode A, after the transceiver module sends the timing advance report, cancel a to-be-reported timing advance. The HARQ mode A supports retransmission.

In a possible design, the transceiver module is further configured to: when the HARQ process associated with the uplink resource is configured with the HARQ mode B, receive fourth indication information from the network device. The processing module is further configured to cancel the to-be-reported timing advance based on the fourth indication information. The fourth indication information indicates to cancel the to-be-reported timing advance.

In a possible design, the fourth indication information is one or more of the following: downlink control information DCI, a media access control control element MAC CE, or radio resource control RRC signaling.

In a possible design, the processing module is further configured to: when the HARQ process associated with the uplink resource is configured with the HARQ mode A, cancel a to-be-reported timing advance when any one of the following conditions is met: The transceiver module sends the timing advance report to the network device by using the uplink resource; or, the transceiver module receives acknowledgment information from the network device. The acknowledgment information is used to acknowledge the timing advance report.

In a possible design, the transceiver module is further configured to receive third indication information from the network device, and the processing module is further configured to cancel the to-be-reported timing advance based on the third indication information. Alternatively, the transceiver module is further configured to receive the third indication information from the network device within preset duration, and the processing module is further configured to cancel the to-be-reported timing advance based on the third indication information. The third indication information indicates to adjust a scheduling parameter.

It should be noted that for a specific implementation of the communication apparatus in the eighth aspect, refer to a behavior function of the terminal device in the timing advance report sending method provided in any one of the seventh aspect or the possible designs of the seventh aspect.

According to a ninth aspect, an embodiment of this application provides a communication apparatus. The communication apparatus may be a terminal device, or a chip or a system-on-a-chip in the terminal device. The communication apparatus may implement functions performed by the terminal device in the foregoing aspects or the possible designs, and the functions may be implemented by hardware. In a possible design, the communication apparatus may include a transceiver and a processor. The transceiver and the processor may be configured to support the communication apparatus in implementing the function in any one of the seventh aspect or the possible designs of the seventh aspect. For example, the transceiver may be configured to send a timing advance report to a network device by using an uplink resource. The processor may be configured to: when a hybrid automatic repeat request HARQ process associated with the uplink resource is configured with a HARQ mode B, after the transceiver sends the timing advance report, skip cancelling a to-be-reported timing advance. The HARQ mode B does not support retransmission. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory, to enable the communication apparatus to perform the timing advance report sending method according to any one of the seventh aspect or the possible designs of the seventh aspect.

For a specific implementation of the communication apparatus in the ninth aspect, refer to a behavior function of the terminal device in the timing advance report sending method provided in any one of the seventh aspect or the possible designs of the seventh aspect.

According to a tenth aspect, an embodiment of this application provides a timing advance report sending method. The method may include: A network device receives a timing advance report from a terminal device by using an uplink resource. When a hybrid automatic repeat request HARQ process associated with the uplink resource is configured with a HARQ mode A, the network device determines that the terminal device cancels a to-be-reported timing advance, where the HARQ mode A supports retransmission. When the HARQ process associated with the uplink resource is configured with a HARQ mode B, the network device determines that the terminal device does not cancel the to-be-reported timing advance, where the HARQ mode B does not support retransmission.

Based on the tenth aspect, the network device may determine, based on a HARQ mode configured for the HARQ process associated with the uplink resource that is used to receive the timing advance report, whether the terminal device cancels the to-be-reported timing advance. In this case, when determining that the terminal device does not cancel the to-be-reported timing advance, the network device may indicate the terminal device to cancel the to-be-reported timing advance, to avoid resource waste caused when the terminal device repeatedly sends the timing advance report.

In a possible design, when the HARQ process associated with the uplink resource is configured with the HARQ mode B, the network device sends fourth indication information to the terminal device. The fourth indication information indicates the terminal device to cancel the to-be-reported timing advance.

Based on the possible design, the network device may indicate, by using the fourth indication information, the terminal device to cancel the to-be-reported timing advance. This provides a feasible solution for the network device to indicate the terminal device to cancel the to-be-reported timing advance.

According to an eleventh aspect, an embodiment of this application provides a communication apparatus. The communication apparatus may implement functions performed by the network device in the tenth aspect or the possible designs of the tenth aspect, and the functions may be implemented by hardware executing corresponding software. The hardware or software includes one or more modules corresponding to the functions, for example, a transceiver module and a processing module. The transceiver module is configured to receive a timing advance report from a terminal device by using an uplink resource. The processing module is configured to: when the hybrid automatic repeat request HARQ process associated with the uplink resource is configured with a HARQ mode A, determine that the terminal device cancels a to-be-reported timing advance, where the HARQ mode A supports retransmission. The processing module is further configured to: when the HARQ process associated with the uplink resource is configured with a HARQ mode B, determine that the terminal device does not cancel a to-be-reported timing advance, where the HARQ mode B does not support retransmission.

In a possible design, the transceiver module is further configured to: when the HARQ process associated with the uplink resource is configured with the HARQ mode B, send fourth indication information to the terminal device, where the fourth indication information indicates the terminal device to cancel a to-be-reported timing advance.

It should be noted that for a specific implementation of the communication apparatus in the eleventh aspect, refer to a behavior function of the network device in the timing advance report sending method provided in any one of the tenth aspect or the possible designs of the tenth aspect.

According to a twelfth aspect, an embodiment of this application provides a communication apparatus. The communication apparatus may be a chip or a system-on-a-chip in a network device. The communication apparatus may implement functions performed by the network device in the foregoing aspects or the possible designs, and the functions may be implemented by hardware. In a possible design, the communication apparatus may include a transceiver and a processor. The transceiver and the processor may be configured to support the communication apparatus in implementing the function in any one of the tenth aspect or the possible designs of the tenth aspect. For example, the transceiver may be configured to receive a timing advance report from a terminal device by using an uplink resource. The processor may be configured to: when a hybrid automatic repeat request HARQ process associated with the uplink resource is configured with a HARQ mode A, determine that the terminal device cancels a to-be-reported timing advance, where the HARQ mode A supports retransmission. The processor may be further configured to: when the HARQ process associated with the uplink resource is configured with a HARQ mode B, determine that the terminal device does not cancel the to-be-reported timing advance, where the HARQ mode B does not support retransmission. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory, to enable the communication apparatus to perform the timing advance report sending method according to any one of the tenth aspect or the possible designs of the tenth aspect.

For a specific implementation of the communication apparatus in the twelfth aspect, refer to a behavior function of the network device in the timing advance report sending method provided in any one of the tenth aspect or the possible designs of the tenth aspect.

According to a thirteenth aspect, a communication apparatus is provided. The communication apparatus includes one or more processors. The one or more processors are configured to run a computer program or instructions. When the one or more processors execute computer program or the instructions, the communication apparatus is enabled to perform the timing advance report sending method according to any one of the first aspect or the possible designs of the first aspect, perform the timing advance report sending method according to any one of the fourth aspect or the possible designs of the fourth aspect, perform the timing advance report sending method according to any one of the seventh aspect or the possible designs of the seventh aspect, or perform the timing advance report sending method according to any one of the tenth aspect or the possible designs of the tenth aspect.

In a possible design, the communication apparatus further includes one or more memories. The one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to a fourteenth aspect, a communication apparatus is provided. The communication apparatus includes an input/output interface and a logic circuit. The input/output interface is configured to input and/or output information. The logic circuit is configured to: perform the timing advance report sending method according to any one of the first aspect or the possible designs of the first aspect, perform the timing advance report sending method according to any one of the fourth aspect or the possible designs of the fourth aspect, perform the timing advance report sending method according to any one of the seventh aspect or the possible designs of the seventh aspect, or perform the timing advance report sending method according to any one of the tenth aspect or the possible designs of the tenth aspect, and perform processing based on the information and/or generate the information.

According to a fifteenth aspect, a computer-readable storage medium is provided. The computer-readable storage medium stores computer instructions or a program. When the computer instructions or the program is run on a computer, the timing advance report sending method according to any one of the first aspect or the possible designs of the first aspect, the timing advance report sending method according to any one of the fourth aspect or the possible designs of the fourth aspect, the timing advance report sending method according to any one of the seventh aspect or the possible designs of the seventh aspect, or the timing advance report sending method according to any one of the tenth aspect or the possible designs of the tenth aspect is performed.

According to a sixteenth aspect, a computer program product including computer instructions is provided. When the computer program product runs on a computer, the timing advance report sending method according to any one of the first aspect or the possible designs of the first aspect, the timing advance report sending method according to any one of the fourth aspect or the possible designs of the fourth aspect, the timing advance report sending method according to any one of the seventh aspect or the possible designs of the seventh aspect, or the timing advance report sending method according to any one of the tenth aspect or the possible designs of the tenth aspect is performed.

According to a seventeenth aspect, an embodiment of this application provides a computer program. When the computer program is run on a computer, the timing advance report sending method according to any one of the first aspect or the possible designs of the first aspect, the timing advance report sending method according to any one of the fourth aspect or the possible designs of the fourth aspect, the timing advance report sending method according to any one of the seventh aspect or the possible designs of the seventh aspect, or the timing advance report sending method according to any one of the tenth aspect or the possible designs of the tenth aspect is performed.

For a technical effect brought by any design manner of the thirteenth aspect to the seventeenth aspect, refer to the technical effect brought by any possible design of the first aspect, refer to the technical effect brought by any possible design of the fourth aspect, refer to the technical effect brought by any possible design of the seventh aspect, or refer to the technical effect brought by any possible design of the tenth aspect.

According to an eighteenth aspect, a communication system is provided. The communication system includes the communication apparatus according to either the second aspect or the third aspect and the communication apparatus according to either the fifth aspect or the sixth aspect, or includes the communication apparatus according to either the eighth aspect or the ninth aspect and the communication apparatus according to either the eleventh aspect or the twelfth aspect.

### BRIEF DESCRIPTION OF DRAWINGS

FIG. 1a is a diagram of a network architecture according to an embodiment of this application;
FIG. 1b is a diagram of a network architecture according to an embodiment of this application;
FIG. 1c is a diagram of a network architecture according to an embodiment of this application;
FIG. 2 is a diagram of a time sequence of uplink synchronization according to an embodiment of this application;
FIG. 3 is a diagram of composition of a communication apparatus according to an embodiment of this application;
FIG. 4 is a flowchart of a timing advance report sending method according to an embodiment of this application;
FIG. 5 is a flowchart of a timing advance report sending method according to an embodiment of this application;
FIG. 6 is a flowchart of a timing advance report sending method according to an embodiment of this application;
FIG. 7 is a flowchart of a timing advance triggering method according to an embodiment of this application;
FIG. 8 is a diagram of composition of a terminal device according to an embodiment of this application; and
FIG. 9 is a diagram of composition of a network device according to an embodiment of this application.

### DESCRIPTION OF EMBODIMENTS

The following describes implementations of embodiments of this application in detail with reference to the accompanying drawings in this specification.

A timing advance report sending method provided in embodiments of this application may be applied to any communication system. The communication system may be a 3rd generation partnership project (3rd generation partnership project, 3GPP) communication system, for example, a long term evolution (long term evolution, LTE) system, may be a 5th generation (5th generation, 5G) mobile communication system, a new radio (new radio, NR) communication system, or a new radio vehicle-to-everything (vehicle-to-everything, NR V2X) system, may be applied to an LTE and 5G hybrid networking system, an NTN communication system, a device-to-device (device-to-device, D2D) communication system, a machine-to-machine (machine-to-machine, M2M) communication system, an internet of things (internet of things, IoT), and another next-generation communication system, for example, 6G, or may be a non-3GPP communication system. This is not limited.

A communication method provided in embodiments of this application may be applied to various communication scenarios, for example, may be applied to a terrestrial communication scenario, may be applied to a non-terrestrial communication scenario (for example, an NTN communication scenario), or may be applied to a communication scenario in which terrestrial communication and non-terrestrial communication are combined. This is not limited.

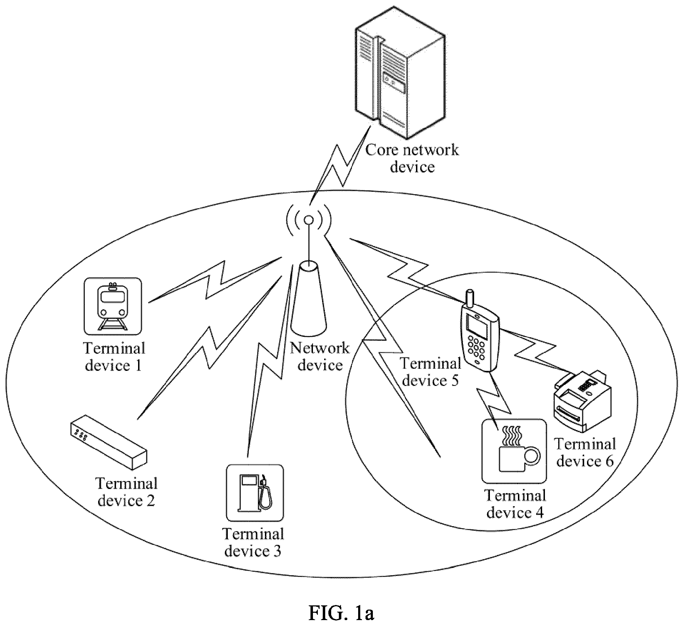

The following uses FIG. 1a as an example to describe a communication system provided in embodiments of this application.

FIG. 1a is a diagram of a network architecture applicable to an embodiment of this application. As shown in FIG. 1a, a terminal device (for example, a terminal device 1, a terminal device 2, a terminal device 3, a terminal device 4, a terminal device 5, and a terminal device 6) may access a wireless network, to obtain a service of an external network (for example, the Internet) via the wireless network, or communicate with another device via the wireless network, for example, may communicate with another terminal device. The wireless network includes a network device and a core network (core network, CN) device. The network device is configured to enable the terminal device to access the wireless network, and the core network device is configured to: manage the terminal device and provide a gateway for communicating with the external network. It should be understood that quantities of devices in the communication system shown in FIG. 1a are merely used as examples. This embodiment of this application is not limited thereto. In actual application, the communication system may further include more terminal devices and more network devices, and may further include another device.

The terminal device in FIG. 1a may be located in a beam/cell coverage area of the network device. The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH); and the network device may send downlink data to the terminal device in a DL direction through a physical downlink shared channel (physical downlink shared channel, PDSCH).

For example, the terminal device 1 to the terminal device 6 may send the uplink data to the network device, and the network device may send the downlink data to any one of the terminal device 1 to the terminal device 6. The network device may send downlink information to the terminal device 4 or the terminal device 6 through the terminal device 5, and the terminal device 4 or the terminal device 6 may send uplink information to the network device through the terminal device 5. In addition, the terminal device 4, the terminal device 5, and the terminal device 6 may also form a communication system. In the communication system, the terminal device 4 or the terminal device 6 may communicate with the terminal device 5 through a sidelink.

The terminal device in FIG. 1a may be a terminal device supporting new radio, and may access the communication system through an air interface, and initiate a call service, an internet access service, or another service. The terminal device may be an entity, on a user side, configured to receive or transmit a signal, and may communicate with the network device.

The terminal device may also be referred to as user equipment (user equipment, UE), a mobile station (mobile station, MS), a mobile terminal (mobile terminal, MT), or the like. Specifically, the terminal device in FIG. 1a may be a mobile phone (mobile phone), a tablet computer, or a computer having a wireless transceiver function. Alternatively, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The network device in FIG. 1a may be any device having a wireless transceiver function, and is mainly configured to: implement a wireless physical control function, resource scheduling and radio resource management, radio access control and mobility management, and another function, and provide a reliable wireless transmission protocol, a data encryption protocol, and the like. The network device may be an entity, on a network side, configured to transmit or receive a signal, and may communicate with the terminal device.

Specifically, the network device may be a device supporting wired access, or may be a device supporting wireless access. For example, the network device may be an access network (access network, AN)/radio access network (radio access network, RAN) device, and includes a plurality of AN/RAN nodes. The AN/ RAN node may be an access point (access point, AP), a base station (NodeB, NB), an enhanced base station (enhance NodeB, eNB), a next-generation base station (NR NodeB, gNB), a transmission reception point (transmission reception point, TRP), a transmission point (transmission point, TP), another access node, or the like.

For example, the network architecture shown in FIG. 1a is applicable to a public land mobile network (public land mobile network, PLMN) or an NTN. The NTN may include a satellite communication system, a high altitude platform station (high altitude platform station, HAPS) communication system, or another non-terrestrial communication system.

The following uses an example in which the network architecture shown in FIG. 1a is applicable to the satellite communication system to describe two possible scenarios: Scenario 1 and Scenario 2 respectively.

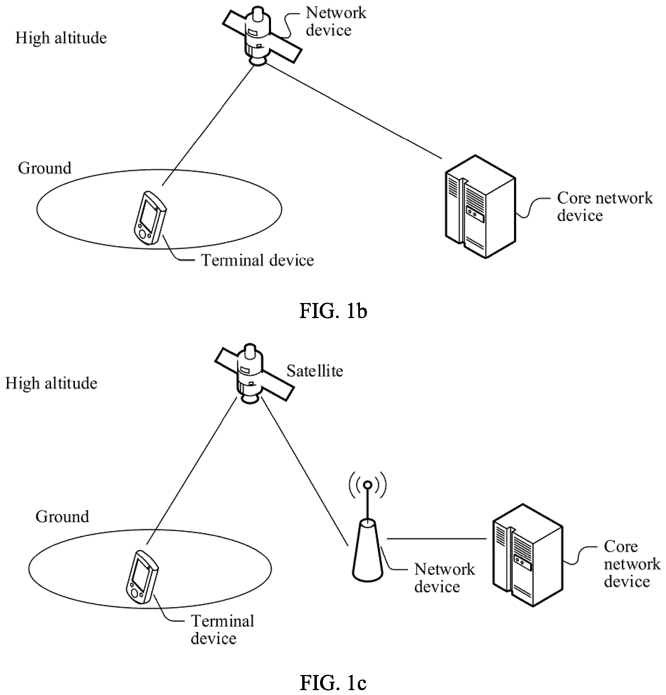

FIG. 1b is a diagram of a network architecture in Scenario 1 according to an embodiment of this application. As shown in FIG. 1b, an example in which a network device is deployed on a satellite (for example, a near-earth orbit satellite) is used. This scenario may also be referred to as a regenerative payload (regenerative payload).

FIG. 1c is a diagram of a network architecture in Scenario 2 according to an embodiment of this application. As shown in FIG. 1c, a network device is deployed on the ground, and when a terminal device communicates with the network device, a satellite forwards a signal. In this scenario, the satellite is equivalent to a relay node or a forwarder. This scenario may also be referred to as a transparent payload (transparent payload).

It should be noted that: (1) The satellite in this embodiment of this application may be a satellite that can automatically adjust a beam (NTN with steerable beams). For example, because the satellite continuously moves around the earth, a projection of a satellite signal on the ground continuously changes. Therefore, the satellite may automatically adjust the beam, so that the projection on the ground can remain unchanged as the satellite moves.

(2) The satellite in this embodiment of this application may be a geostationary earth orbit (geostationary earth orbit, GEO) satellite, or may be a low earth orbit (low earth orbit, LEO) satellite. The low earth orbit satellite may also be referred to as a near-earth orbit satellite.

(3) The network architecture shown in FIG. 1a, FIG. 1b, or FIG. 1c is applicable to various communication systems of a radio access technology (radio access technology, RAT). For example, the communication system may be an LTE communication system, may be a 5G (or referred to as new radio (new radio, NR)) communication system, may be a transition system between the LTE communication system and the 5G communication system, where the transition system may also be referred to as a 4.5G communication system, or certainly may be a future communication system. The network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the communication network architecture and emergence of a new service scenario, the technical solutions provided in embodiments of this application are also applicable to similar technical problems.

Before embodiments of this application are described, technical terms used in embodiments of this application are described.

Non-terrestrial communication network (non-terrestrial network, NTN): A high altitude platform, a satellite, or the like is introduced into a wireless communication system. The high altitude platform or the satellite may serve as a relay node to assist communication between a terminal device and a network device that is located on the ground, or may serve as a carrier to carry the network device in the air to communicate with the terminal device.

In the NTN network, because the high altitude platform or the satellite participates in a communication process, when the terminal device and the network device perform data transmission, data needs to be transmitted to the high altitude platform or the satellite. Because a propagation distance is very long, round-trip time (round-trip time, RTT) of the data transmission is long, and may reach tens of milliseconds to hundreds of milliseconds. However, in a conventional terrestrial communication network, because a distance between a terminal device and a network device is short, RTT is short, and is only a few milliseconds or shorter.

Hybrid automatic repeat request (hybrid automatic repeat request, HARQ): is a method for ensuring data transmission reliability. A transmit end may send a data packet to a receive end by using a HARQ process. After receiving the data packet, the receive end may detect whether an error occurs in the received data packet. If no error occurs, the receive end may send an acknowledgment (acknowledgment, ACK) to the transmit end. After receiving the ACK, the transmit end may continue to send a next data packet. If the error occurs, the receive end may discard the data packet, and send a negative acknowledgment (negative acknowledgment, NACK) to the transmit end. After receiving the NACK, the transmit end may retransmit same data.

For a data packet with the error, some data packets cannot be decoded correctly, but include useful information. If the data packets are discarded, the useful information in the data packets is lost. In this case, a HARQ with soft combining (HARQ with soft combining) may be used to store the received data packet with the error in a HARQ buffer (HARQ buffer), and combine the data packet with the error with a subsequently received retransmitted data packet to obtain a data packet that is more reliable than that decoded alone (that is, a "soft combining" process). Then, a combined data packet is decoded. If decoding is still unsuccessful, a process in which "retransmission is requested, and then soft combining is performed" is repeated.

Based on the foregoing descriptions of the NTN network and the HARQ process, when the HARQ process is used to perform data transmission in the NTN network, large impact is caused on a HARQ mechanism because a transmission delay of the NTN network is high.

After sending the data packet to the receive end, the transmit end may buffer the sent data packet into the HARQ buffer, and occupy one HARQ process identifier. When the transmit end receives feedback for the data packet, if the received feedback is the acknowledgment, the transmit end deletes the data packet in the HARQ buffer and releases the HARQ process identifier to be allocated to another data packet; or if the received feedback is the negative acknowledgment, the transmit end may retransmit the data packet in the HARQ buffer.

One HARQ entity has up to 16 or 32 HARQ process identifiers. Because a transmission delay of the data packet and a transmission delay of the feedback are both high, the data packet in the HARQ buffer cannot be promptly deleted, and a requirement for a size of the HARQ buffer is very high. In addition, the HARQ process identifier is occupied by a data packet for a long time, and a limited process identifier is fully occupied quickly. Other data cannot be transmitted because an available process identifier is absent. As a result, a data transmission rate is reduced, and a HARQ delay problem is caused.

HARQ mode: To resolve a "HARQ delay" problem caused by a high transmission delay in an NTN network, a characteristic of enabling or disabling a HARQ function is introduced. A network device may configure retransmission as enabled or disabled for each uplink HARQ process of a terminal device: referred to as a HARQ mode A and a HARQ mode B respectively.

The network device may also configure feedback as enabled or disabled for each downlink HARQ process of the terminal device. If retransmission or feedback for a HARQ process of the terminal device is disabled, the terminal device does not need to perform corresponding retransmission or feedback for data transmitted by using the HARQ process.

For a service having a high reliability requirement, a transmission mode in which the HARQ function is enabled (to be specific, retransmission or feedback is configured as enabled for the HARQ process) is suitable for use, to ensure transmission reliability through a plurality of times of retransmission and feedback. For a service having a high requirement for a transmission delay, a transmission mode in which the HARQ function is disabled (to be specific, retransmission or feedback is configured as disabled for the HARQ process) is suitable for use, to avoid a multiplied delay caused by a plurality of times of retransmission or feedback.

It should be noted that when allocating an uplink resource for uplink transmission of the terminal device, the network device may include, in downlink control information (downlink control information, DCI), a HARQ process identifier associated with the uplink resource, to indicate a specific HARQ process in which a data packet transmitted by using the uplink resource is transmitted, and perform data transmission based on a HARQ mode configured for the HARQ process.

Timing advance (timing advance, TA): is used to maintain uplink time synchronization between a terminal device and a network device.

Specifically, when the terminal device communicates with the network device, uplink and downlink time synchronization needs to be performed. The terminal device may implement downlink time synchronization based on a primary synchronization signal and a secondary synchronization signal that are broadcast in a cell, and implement uplink time synchronization based on the TA.

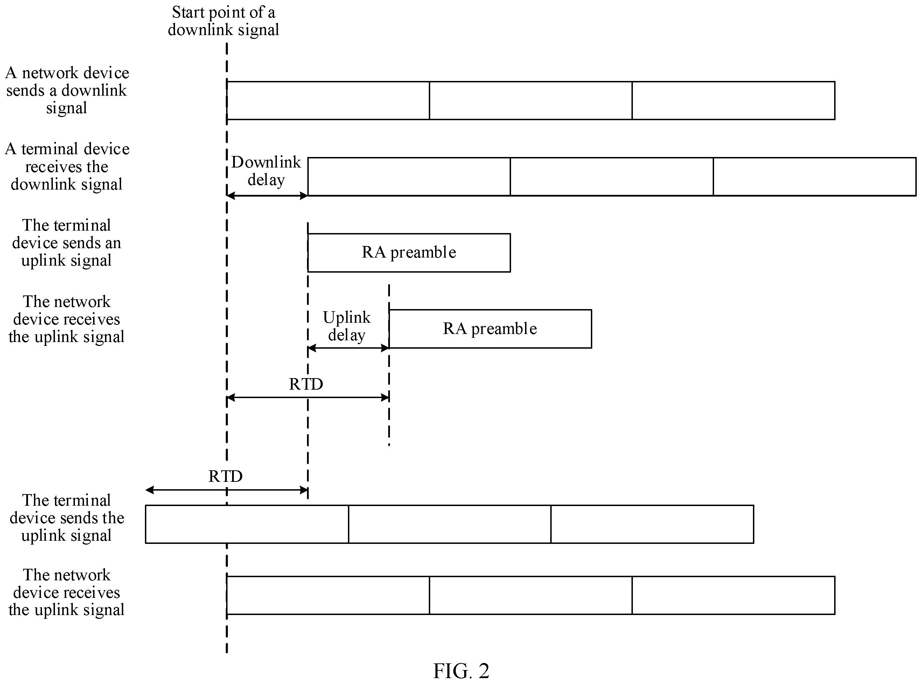

For example, as shown in FIG. 2, when the TA is not used to perform uplink time synchronization, there is a downlink delay between a moment at which the network device sends a downlink signal (for example, a downlink synchronization frame) and a moment at which the terminal device receives the downlink signal, and there is an uplink delay between a moment at which the terminal device sends an uplink signal (for example, a random access signal including a random access (random access, RA) preamble) and a moment at which the network device receives the uplink signal. In other words, there is a round-trip delay (round-trip delay, RTD) of the terminal device between the moment at which the network device sends the downlink signal and the moment at which the network device receives the uplink signal. Because RTDs corresponding to terminal devices at different locations in a same cell may be different, time points at which uplink signals sent by the terminal devices in the same cell arrive at the network device are not aligned.

When the TA is used to perform uplink time synchronization, as shown in FIG. 2, each terminal device may send an uplink signal in advance based on a TA corresponding to the terminal device, to ensure that time points at which uplink signals of terminal devices in a same cell arrive at the network device are aligned. In this way, the network device may process the terminal devices in the same cell based on one time point.

The TA may be an RTD between the terminal device and the network device, and the terminal device may determine the TA based on location information of the terminal device and the network device.

Based on the foregoing descriptions of the TA, for an NTN network, because a movement speed of a high altitude platform or a satellite is high, a transmission delay between the terminal device and the network device changes quickly. When the terminal device cannot promptly report the TA, the network device may not promptly learn of a change of the transmission delay between the terminal device and the network device, and network device scheduling is affected.

In view of this, it is proposed that when the terminal device is in connected state, the terminal device may determine the TA based on the location information of the terminal device and the network device, and report the TA to the network device. Specifically, the network device may configure, for the terminal device, a trigger threshold for TA reporting. The terminal device may compare a current TA obtained through calculation with a latest successfully reported TA, to determine whether a variation between the current TA obtained through calculation and the latest successfully reported TA exceeds the trigger threshold preconfigured by the network device. If the variation exceeds the trigger threshold, TA reporting is triggered. If an available uplink resource is present, the terminal device may generate a timing advance report media access control control element (timing advance report media access control control element, TA report MAC CE), and may send the TA report MAC CE to the network device by using the available uplink resource. The network device may determine a transmission delay between the terminal device and the network device based on the TA report MAC CE sent by the terminal device, to improve scheduling efficiency.

The terminal device may report the TA to the network device by using an uplink resource allocated by the network device, and the uplink resource may be associated with a HARQ process.

However, when the uplink resource is associated with a HARQ process configured with a HARQ mode B, because uplink retransmission in the HARQ mode B is disabled, in other words, the HARQ mode B does not support uplink retransmission, TA reporting may be unsuccessful, in other words, reliability of TA reporting is low, and the network device scheduling is affected.

To resolve this technical problem, an embodiment of this application provides a timing advance report sending method. The method may include: A terminal device determines whether an available first resource is present. The available first resource is associated with a hybrid automatic repeat request HARQ process configured with a HARQ mode A or a HARQ process configured with no HARQ mode, and both the HARQ process configured with the HARQ mode A and the HARQ process configured with no HARQ mode support retransmission. When the available first resource is present, the terminal device sends a timing advance report to a network device by using the available first resource.

In this embodiment of this application, the terminal device may send the timing advance report to the network device by using the available first resource associated with the HARQ process configured with the HARQ mode A or the available first resource associated with the HARQ process configured with no HARQ mode. When the available first resource is absent, the terminal device sends no timing advance report to the network device, to avoid a case that the terminal device unsuccessfully sends the timing advance report by using an uplink resource associated with a HARQ process configured with a HARQ mode B, and avoid affecting network scheduling. In addition, because both the HARQ process configured with the HARQ mode A and the HARQ process configured with no HARQ mode support retransmission, when the terminal device unsuccessfully sends the timing advance report by using the available first resource, the terminal device may retransmit the timing advance report to the network device, so that the network device can receive the timing advance report sent by the terminal device, to improve reliability of timing advance reporting and assist network device scheduling.

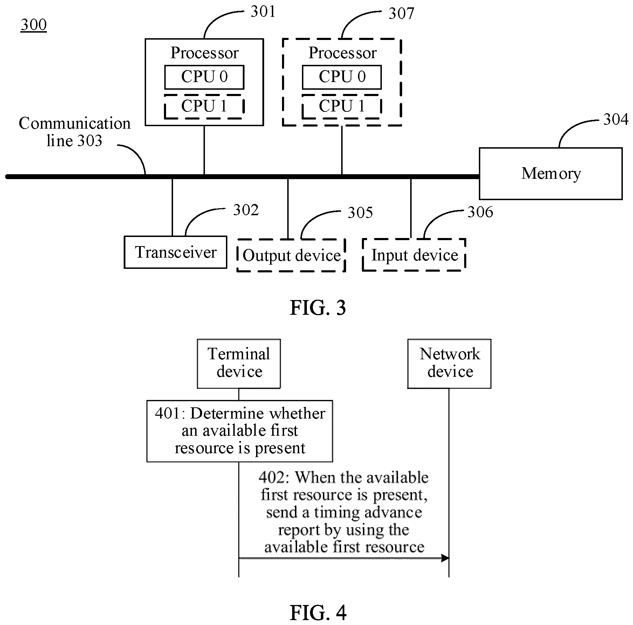

During specific implementation, as shown in FIG. 1a to FIG. 1c, for example, both each terminal device and each network device may have a composition structure shown in FIG. 3, or may include components shown in FIG. 3. FIG. 3 is a diagram of composition of a communication apparatus 300 according to an embodiment of this application. The communication apparatus 300 may be a terminal device, or a chip or a system-on-a-chip in the terminal device, or may be a network device, or a chip or a system-on-a-chip in the network device. As shown in FIG. 3, the communication apparatus 300 includes a processor 301, a transceiver 302, and a communication line 303.

Further, the communication apparatus 300 may further include a memory 304. The processor 301, the memory 304, and the transceiver 302 may be connected through the communication line 303.

The processor 301 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The transceiver 302 is configured to communicate with another device or another communication network. The another communication network may be the Ethernet, a radio access network (radio access network, RAN), a wireless local area network (wireless local area network, WLAN), or the like. The transceiver 302 may be a module, a circuit, a transceiver, or any apparatus that can implement communication.

The communication line 303 is configured to transfer information between components included in the communication apparatus 300.

The memory 304 is configured to store instructions. The instructions may be a computer program.

The memory 304 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 304 may be independent of the processor 301, or may be integrated with the processor 301. The memory 304 may be configured to store instructions, program code, some data, or the like. The memory 304 may be located inside the communication apparatus 300, or may be located outside the communication apparatus 300. This is not limited. The processor 301 is configured to execute the instructions stored in the memory 304, to implement timing advance report sending methods provided in the following embodiments of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a keyboard, a mouse, a microphone, a joystick, or another device, and the output device 305 is a display, a speaker (speaker), or another device.

It should be noted that the communication apparatus 300 may be a desktop computer, a portable computer, a network server, a mobile phone, a tablet computer, a wireless terminal, an embedded device, a chip system, or a device having a similar structure in FIG. 3. In addition, the composition structure shown in FIG. 3 does not constitute a limitation on the communication apparatus. In addition to the components shown in FIG. 3, the communication apparatus may include more or fewer components than the components shown in the figure, or some components may be combined, or there may be a different component arrangement.

In this embodiment of this application, the chip system may include a chip, or may include a chip and another discrete component.

In addition, actions, terms, and the like in this embodiment of this application may be mutually referenced. This is not limited. In this embodiment of this application, names of messages exchanged between devices, names of parameters in the messages, or the like are merely examples. Other names may alternatively be used during specific implementation. This is not limited.

With reference to the communication systems shown in FIG. 1a to FIG. 1c, the following describes a timing advance report sending method provided in an embodiment of this application with reference to FIG. 4. A terminal device may be any terminal device in the communication systems shown in FIG. 1a to FIG. 1c, and a network device may be any network device in the communication systems shown in FIG. 1a to FIG. 1c. The terminal device and the network device described in the following embodiments may have the components shown in FIG. 3. Processing performed by a single execution body (the terminal device or the network device) shown in embodiments of this application may also be divided into processing performed by a plurality of execution bodies, and these execution bodies may be logically and/or physically separated. For example, processing performed by the network device may be divided into processing performed by at least one of a central unit (central unit, CU), a distributed unit (distributed unit, DU), and a radio unit (radio unit, RU).

FIG. 4 is a flowchart of a timing advance report sending method according to an embodiment of this application. As shown in FIG. 4, the method may include the following steps.

Step 401: A terminal device determines whether an available first resource is present.

When the terminal device in connected state triggers timing advance reporting based on a trigger threshold, a timing advance report may be in waiting state (that is, a pending state, or described as a triggered state). In this case, the terminal device may determine whether the available first resource is present, or it may be described as that the terminal device determines whether the available first resource is present.

The available first resource may be associated with a HARQ process configured with a HARQ mode A or a HARQ process configured with no HARQ mode. Both the HARQ process configured with the HARQ mode A and the HARQ process configured with no HARQ mode support retransmission.

Optionally, when allocating an uplink resource to the terminal device by using DCI, a network device may include a HARQ process identifier in the DCI. In this case, it may be considered that the uplink resource is associated with the HARQ process identifier. After receiving the DCI sent by the network device, the terminal device may determine, based on the HARQ process identifier associated with the uplink resource, a HARQ process associated with the uplink resource, and determine, based on a HARQ mode configured by the network device for the HARQ process, a HARQ mode for the process associated with the uplink resource, in other words, may be a HARQ mode associated with the uplink resource.

The HARQ mode may include one or more of the following: the HARQ mode A or a HARQ mode B. The HARQ mode A may support retransmission, and the HARQ mode B does not support retransmission. In addition, when the HARQ process is configured with no HARQ mode, to be specific, neither the HARQ mode A nor the HARQ mode B is configured, the HARQ process supports retransmission.

In this embodiment of this application, for the HARQ process configured with the HARQ mode A and the HARQ process configured with no HARQ mode, actions performed by the terminal device are similar. In this embodiment of this application, an example in which the HARQ process is configured with the HARQ mode A is used to describe an action performed by the terminal device. It should be understood that when the HARQ process is configured with no HARQ mode, an action performed by the terminal device is similar to the action performed by the terminal device when the HARQ process is configured with the HARQ mode A. In other words, in this embodiment of this application, a technical solution of the HARQ process configured with the HARQ mode A is also applicable to the HARQ process configured with no HARQ mode.

Optionally, the network device configures a HARQ mode for a HARQ process by using radio resource control (radio resource control, RRC) signaling.

Optionally, when the HARQ process is configured with the HARQ mode A, if the network device sends physical downlink control channel (physical downlink control channel, PDCCH) information (DCI) to the terminal device to indicate the terminal device to perform uplink transmission by using the HARQ process, the terminal device may start a corresponding discontinuous reception (discontinuous reception, DRX) timer (for example, a HARQ RTT timer) after a specific time offset (for example, an RTD between the terminal device and the network device). After the HARQ RTT timer expires, the terminal device starts a HARQ retransmission timer. Starting these DRX timers indicates that the terminal device supports uplink HARQ retransmission.

When the HARQ process is configured with the HARQ mode B, if the network device sends PDCCH information (DCI) to the terminal device to indicate the terminal device to perform uplink transmission by using the HARQ process, the terminal device does not start a corresponding DRX timer (for example, a HARQ RTT timer or a HARQ retransmission timer). Starting no DRX timers indicates that the terminal device does not support uplink HARQ retransmission.

When the HARQ process is configured with neither the HARQ mode A nor the HARQ mode B, if the network device sends physical downlink control channel (physical downlink control channel, PDCCH) information (DCI) to the terminal device to indicate the terminal device to perform uplink transmission by using the HARQ process, the terminal device may start a corresponding DRX timer (for example, a HARQ RTT timer) without a specific time offset (for example, an RTD between the terminal device and the network device). After the HARQ RTT timer expires, the terminal device starts a HARQ retransmission timer. Starting these DRX timers indicates that the terminal device supports uplink HARQ retransmission.

Based on the foregoing descriptions of the HARQ mode, the terminal device may determine, based on one or more of the following four possible examples, whether the available first resource is present.

In a first possible example, when the uplink resource allocated by the network device to the terminal device is an uplink resource associated with the HARQ process configured with the HARQ mode A or an uplink resource associated with the HARQ process configured with no HARQ mode (or it may be described as that when the uplink resource allocated by the network device to the terminal device is not an uplink resource associated with the HARQ process configured with the HARQ mode B), the terminal device may determine, as the available first resource, the uplink resource associated with the HARQ process configured with the HARQ mode A or the uplink resource associated with the HARQ process configured with no HARQ mode, that is, determine that the available first resource is present.

Optionally, the available first resource is greater than or equal to a resource occupied by the timing advance report and a packet header of the timing advance report.

When the uplink resource allocated by the network device to the terminal device is the uplink resource associated with the HARQ process configured with the HARQ mode A or the uplink resource associated with the HARQ process configured with no HARQ mode, the terminal device may determine whether the uplink resource is greater than or equal to the resource occupied by the timing advance report and the packet header of the timing advance report. If the uplink resource is greater than or equal to the resource occupied by the timing advance report and the packet header of the timing advance report, the terminal device may determine, as the available first resource, the uplink resource associated with the HARQ process configured with the HARQ mode A or the uplink resource associated with the HARQ process configured with no HARQ mode.

Optionally, a MAC entity of the terminal device determines whether the uplink resource is greater than or equal to the resource occupied by the timing advance report and the packet header of the timing advance report. The terminal device may send the timing advance report to the network device by using a MAC CE or RRC signaling.

For example, when the terminal device sends the timing advance report to the network device, the terminal device may send the timing advance report to the network device by using the MAC CE, in other words, the terminal device may send a timing advance report MAC CE to the network device.

In this case, the packet header of the timing advance report may be a MAC packet header of the timing advance report MAC CE, and the available first resource is greater than or equal to a resource occupied by the timing advance report MAC CE and the MAC packet header of the timing advance report MAC CE.

It should be noted that, that the available first resource is greater than or equal to the resource occupied by the timing advance report and the packet header of the timing advance report may alternatively be described as that the available first resource may accommodate the timing advance report and the packet header of the timing advance report, or described as that a quantity of bits of the available first resource is greater than or equal to a sum of a quantity of bits of the timing advance report and a quantity of bits of the packet header of the timing advance report.

In a second possible example, when the uplink resource allocated by the network device to the terminal device is an uplink resource associated with the HARQ process configured with the HARQ mode A or an uplink resource associated with the HARQ process configured with no HARQ mode, if the uplink resource is less than a resource occupied by the timing advance report and a packet header of the timing advance report, or transmitting a timing advance report MAC CE by using the uplink resource does not meet another rule, the terminal device may determine that the available first resource is absent.

For descriptions of the resource occupied by the timing advance report and the packet header of the timing advance report, refer to the related descriptions in the first possible example. Details are not described.

In a third possible example, when the uplink resource allocated by the network device to the terminal device is an uplink resource associated with the HARQ process configured with the HARQ mode B, the terminal device may determine that the available first resource is absent.

Because the HARQ mode B does not support retransmission, if the terminal device sends the timing advance report to the network device by using the uplink resource associated with the HARQ process configured with the HARQ mode B, the timing advance report may be sent unsuccessfully, and network device scheduling is affected. Therefore, when the uplink resource is the uplink resource associated with the HARQ process configured with the HARQ mode B, the terminal device determines that the available first resource is absent.

In other words, the available first resource may alternatively be described as an uplink resource that is not associated with the HARQ process configured with the HARQ mode B.

In a fourth possible example, when the network device does not allocate the uplink resource to the terminal device, or the network device allocates the uplink resource to the terminal device, but the terminal device cannot use the uplink resource within specific time, the terminal device may determine that the available first resource is absent.

Based on the foregoing four possible examples, it should be noted that when the uplink resource allocated by the network device to the terminal device includes the uplink resource associated with the HARQ process configured with the HARQ mode A, includes the uplink resource associated with the HARQ process configured with the HARQ mode B, and further includes an uplink resource associated with the HARQ process configured with neither the HARQ mode A nor the HARQ mode B (or described as the uplink resource associated with the HARQ process configured with no HARQ mode), the terminal device may determine, from the uplink resource associated with the HARQ process configured with the HARQ mode A and the uplink resource associated with the HARQ process configured with no HARQ mode, whether the available first resource is present.

Optionally, after performing a logical channel priority process, the terminal device may determine whether the available first resource is present.

When the terminal device sends data to the network device, the data may include data packets from different logical channels and different types of MAC CEs. The terminal device may determine, based on priorities of the logical channels and priorities of the MAC CEs, data to be preferentially sent.

A priority of a MAC CE is usually higher than a priority of a logical channel.

For example, the terminal device sends the timing advance report to the network device by using the MAC CE. When the terminal device determines, based on a priority, to preferentially send the MAC CE, the terminal device may determine whether the available first resource is present. If the available first resource is present, the terminal device may send the timing advance report MAC CE to the network device by using the available first resource.

Optionally, when an attribute associated with the timing advance report MAC CE matches an attribute of the available first resource, the terminal device may send the timing advance report MAC CE to the network device by using the available first resource. The attribute may be at least one of the following: a HARQ mode, a cell, a carrier, a resource type, PUSCH duration, a subcarrier spacing, or the like.

That "the attribute associated with the timing advance report MAC CE matches the attribute of the available first resource" may be that the attribute associated with the timing advance report MAC CE is the same as the attribute of the available first resource, may be that a value of the attribute associated with the timing advance report MAC CE is the same as a value of the attribute of the available first resource, or may be that a difference between the value of the attribute associated with the timing advance report MAC CE and the value of the attribute of the available first resource is within a specific range. The range may be preconfigured, or may be predefined in a protocol. This is not limited.

The resource type may be a dynamic scheduling resource or a configured resource (for example, a type 1 configured resource and a type 2 configured resource). The carrier may be a cell, a carrier frequency, a frequency range, or a bandwidth part (bandwidth part, BWP).

Step 402: When the available first resource is present, the terminal device may send the timing advance report to the network device by using the available first resource. Correspondingly, the network device may receive, by using the first resource, the timing advance report sent by the terminal device.

The terminal device may determine, based on the four possible examples in step 401, whether the available first resource is present. Details are not described. That "when the available first resource is present" may also be described as that if the available first resource is present, described as that it is assumed that the available first resource is present, or the like. This is not limited.

For example, the terminal device may send the timing advance report to the network device by using the MAC CE.

Specifically, when the terminal device determines that the available first resource is present, the terminal device may generate the timing advance report MAC CE, and send the timing advance report MAC CE to the network device by using the available first resource.

Optionally, the terminal device indicates a multiplexing and assembly entity in the MAC entity to generate the timing advance report MAC CE.

It should be noted that because both the HARQ process configured with the HARQ mode A and the HARQ process configured with no HARQ mode support retransmission, when the terminal device unsuccessfully sends the timing advance report to the network device by using the available first resource, the network device may send retransmission indication information to the terminal device, and the terminal device may retransmit the timing advance report to the network device based on the retransmission indication information.

According to the method shown in FIG. 4, the terminal device may send the timing advance report to the network device by using the available first resource associated with the HARQ process configured with the HARQ mode A or the available first resource associated with the HARQ process configured with no HARQ mode. When the available first resource is absent, the terminal device sends no timing advance report to the network device, to avoid a case that the terminal device unsuccessfully sends the timing advance report by using the uplink resource associated with the HARQ process configured with the HARQ mode B, and avoid affecting network scheduling. In addition, because both the HARQ process configured with the HARQ mode A and the HARQ process configured with no HARQ mode support retransmission, when the terminal device unsuccessfully sends the timing advance report by using the available first resource, the terminal device may retransmit the timing advance report to the network device, so that the network device can receive the timing advance report sent by the terminal device, to improve reliability of timing advance reporting and assist network device scheduling.

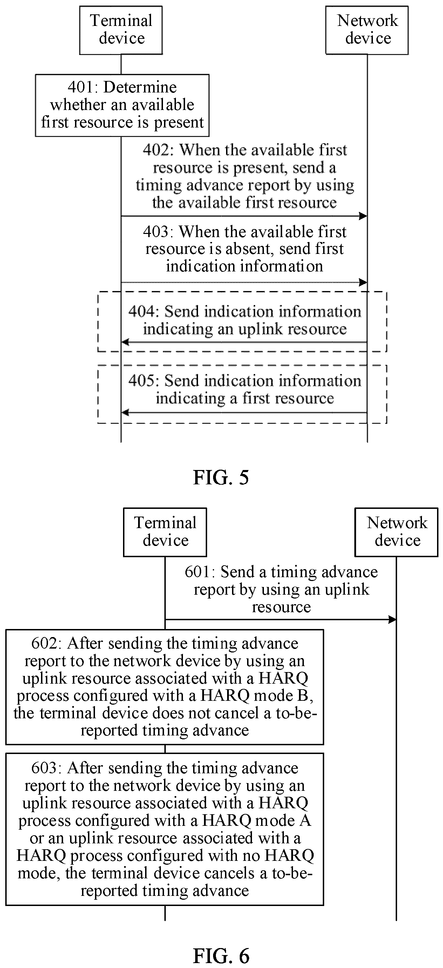

According to the method shown in FIG. 4, when the terminal device determines that the available first resource is absent, as shown in step 403 in FIG. 5, the terminal device may send first indication information to the network device.

The first indication information may be used to request an uplink resource. Alternatively, the first indication information may indicate that a to-be-reported timing advance is present. Alternatively, the first indication information may be used to request the uplink resource associated with the HARQ process configured with the HARQ mode A or the uplink resource associated with the HARQ process configured with no HARQ mode.

In a first possible design, when the first indication information is used to request the uplink resource, the first indication information may be a scheduling request (scheduling request, SR), or a scheduling request may carry the first indication information.

When the terminal device sends the first indication information to the network device, the network device may allocate the uplink resource to the terminal device based on the first indication information.

For example, as shown in step 404 in FIG. 5, the network device may send, to the terminal device, indication information indicating the uplink resource, and the terminal device may determine, based on the indication information, an uplink resource allocated by the network device.

Optionally, after determining the uplink resource allocated by the network device, the terminal device may further determine whether the uplink resource is the available first resource. If the uplink resource is the available first resource, the terminal device may send the timing advance report to the network device by using the available first resource.

For descriptions of the terminal device determining whether the uplink resource is the available first resource, refer to the related descriptions, in step 401, of the terminal device determining whether the available first resource is present. Details are not described.

In a second possible design, when the first indication information indicates that the to-be-reported timing advance is present, the first indication information may be one or more of the following: an SR, physical uplink control channel (physical uplink control channel, PUCCH) signaling, or a MAC CE, or the first indication information is carried in one or more of the following signaling: an SR, PUCCH signaling, or a MAC CE. The SR is different from an SR used to request the uplink resource, and the SR is a special SR specially configured for the purpose. When receiving the SR used to request the uplink resource, the network device only allocates the uplink resource to the terminal device, and does not perform special processing on the resource type. However, after receiving the special SR, the network device needs to allocate the uplink resource associated with the HARQ process configured with the HARQ mode A or the uplink resource associated with the HARQ process configured with no HARQ mode.

When the first indication information indicates that the to-be-reported timing advance is present, the network device may determine, based on the first indication information, that the to-be-reported timing advance is present on the terminal device. In this case, the network device may allocate a first resource to the terminal device roughly based on a size of the timing advance report MAC CE, so that the terminal device can promptly send the timing advance report to the network device. The first resource is associated with the HARQ process configured with the HARQ mode A or the HARQ process configured with no HARQ mode. After obtaining the first resource allocated by the network device, the terminal device may further determine whether the first resource is the available first resource. If the first resource is the available first resource, the terminal device may send the timing advance report to the network device by using the available first resource.

For example, as shown in step 405 in FIG. 5, the network device may send, to the terminal device, indication information indicating the first resource. The terminal device determines, based on the indication information, the first resource allocated by the network device, and determines whether the first resource is the available first resource. If the first resource is the available first resource, the terminal device may send the timing advance report to the network device by using the available first resource.

For descriptions of the terminal device determining whether the first resource is the available first resource, refer to the related descriptions, in step 401, of the terminal device determining whether the available first resource is present. Details are not described.

When the first indication information is the SR, or the first indication information is carried in the SR, the SR may be a specially designed SR. The terminal device may indicate, by using a sent resource location, that the SR is an SR specially designed to indicate that the to-be-reported timing advance is present.

When the first indication information is the PUCCH signaling, or the first indication information is carried in the PUCCH signaling, the PUCCH signaling may be specially designed PUCCH signaling. The terminal device may indicate, by using a sent resource location, that the PUCCH signaling is PUCCH signaling specially designed to indicate that the to-be-reported timing advance is present.

When the first indication information is the MAC CE, or the first indication information is carried in the MAC CE, the MAC CE may be a specially designed MAC CE. The terminal device may adjust a logical channel ID in the MAC packet header of the MAC CE or another indication field (for example, a reserved field or a newly designed extension field) of the MAC CE, to indicate that the MAC CE is a MAC CE specially designed to indicate that the to-be-reported timing advance is present.

Optionally, when the first indication information is the MAC CE, or the first indication information is carried in the MAC CE, the terminal device may send the MAC CE to the network device by using any uplink resource. The any uplink resource may include the uplink resource associated with the HARQ process configured with the HARQ mode B.

In a third possible design, when the first indication information is used to request the uplink resource associated with the HARQ process configured with the HARQ mode A or the uplink resource associated with the HARQ process configured with no HARQ mode, the first indication information may be one or more of the following: an SR, physical uplink control channel (physical uplink control channel, PUCCH) signaling, or a MAC CE, or the first indication information is carried in one or more of the following signaling: an SR, PUCCH signaling, or a MAC CE. The SR is different from an SR used to request the uplink resource, and the SR is a special SR specially configured for the purpose. When receiving the SR used to request the uplink resource, the network device only allocates the uplink resource to the terminal device, and does not perform special processing on the resource type. However, after receiving the special SR, the network device needs to allocate the uplink resource associated with the HARQ process configured with the HARQ mode A or the uplink resource associated with the HARQ process configured with no HARQ mode.

When the first indication information is used to request the uplink resource associated with the HARQ process configured with the HARQ mode A or the uplink resource associated with the HARQ process configured with no HARQ mode, the network device may allocate a first resource to the terminal device based on the first indication information, so that the terminal device can promptly send the timing advance report to the network device. The first resource is associated with the HARQ process configured with the HARQ mode A or the HARQ process configured with no HARQ mode. After obtaining the first resource allocated by the network device, the terminal device may further determine whether the first resource is the available first resource. If the first resource is the available first resource, the terminal device may send the timing advance report to the network device by using the available first resource.

For example, as shown in step 405 in FIG. 5, the network device may send, to the terminal device, indication information indicating the first resource. The terminal device determines, based on the indication information, the first resource allocated by the network device, and determines whether the first resource is the available first resource. If the first resource is the available first resource, the terminal device may send the timing advance report to the network device by using the available first resource.

For descriptions of the terminal device determining whether the first resource is the available first resource, refer to the related descriptions, in step 401, of the terminal device determining whether the available first resource is present. Details are not described.

When the first indication information is the SR, or the first indication information is carried in the SR, the SR may be a specially designed SR. The terminal device may indicate, by using a sent resource location, that the SR is an SR specially designed to request the uplink resource associated with the HARQ process configured with the HARQ mode A or the uplink resource associated with the HARQ process configured with no HARQ mode.

When the first indication information is the PUCCH signaling, or the first indication information is carried in the PUCCH signaling, the PUCCH signaling may be specially designed PUCCH signaling. The terminal device may indicate, by using a sent resource location, that the PUCCH signaling is PUCCH signaling specially designed to request the uplink resource associated with the HARQ process configured with the HARQ mode A or the uplink resource associated with the HARQ process configured with no HARQ mode.

When the first indication information is the MAC CE, or the first indication information is carried in the MAC CE, the MAC CE may be a specially designed MAC CE. The terminal device may adjust a logical channel ID in the MAC packet header of the MAC CE or another indication field (for example, a reserved field or a newly designed extension field) of the MAC CE, to indicate that the MAC CE is a MAC CE specially designed to request the uplink resource associated with the HARQ process configured with the HARQ mode A or the uplink resource associated with the HARQ process configured with no HARQ mode.

Optionally, when the first indication information is the MAC CE, or the first indication information is carried in the MAC CE, the terminal device may send the MAC CE to the network device by using any uplink resource. The any uplink resource may include the uplink resource associated with the HARQ process configured with the HARQ mode B.

Based on the foregoing three possible designs, optionally, when the available first resource is absent, and a function of sending the first indication information is configured as enabled, the terminal device sends the first indication information to the network device.

After determining that the available first resource is absent, the terminal device may determine whether the function of sending the first indication information is configured as enabled. If the function is configured as enabled, the terminal device may send the first indication information to the network device.

Optionally, that the function of sending the first indication information is configured as enabled may alternatively be described as that a value of the function of sending the first indication information is set to "enable", or described as that a value of the first indication information is set to "enable".

For example, when the first indication information is the SR, or is carried in the SR, that the function of sending the first indication information is configured as enabled may be that a value of a corresponding control parameter is set to "enable". When the first indication information is the PUCCH signaling, or is carried in the PUCCH signaling, that the function of sending the first indication information is configured as enabled may be that a value of a corresponding control parameter is set to "enable". When the first indication information is the MAC CE, or is carried in the MAC CE, that the function of sending the first indication information is configured as enabled may be that a value of a corresponding control parameter is set to "enable".

Optionally, when the available first resource is absent, the terminal device may further send second indication information to the network device.

The second indication information may indicate a reason why the available first resource is absent. The reason why the available first resource is absent may include one or more of the following: An available uplink resource is absent, an uplink resource associated with the HARQ process configured with the HARQ mode A or an uplink resource associated with the HARQ process configured with no HARQ mode is absent, or an uplink resource associated with the HARQ process configured with the HARQ mode A or an uplink resource associated with the HARQ process configured with no HARQ mode is present, but the uplink resource is less than the resource occupied by the timing advance report and the packet header of the timing advance report. Alternatively, when the timing advance report cannot be sent due to another limiting factor, the second indication information may indicate the limiting factor.

Optionally, the second indication information and the first indication information may be carried in same information, or may be carried in different information. In addition, the second indication information and the first indication information may alternatively be same indication information.

For example, both the second indication information and the first indication information may be carried in the MAC CE. When the first indication information is the SR or the PUCCH signaling, or is carried in the SR or the PUCCH signaling, the second indication information may be carried in other information, for example, may be carried in the MAC CE.

According to the method shown in FIG. 5, when the terminal device determines that the available first resource is absent, the terminal device may send the first indication information to the network device. The network device may allocate the uplink resource or the first resource to the terminal device based on the first indication information. The terminal device may determine whether the uplink resource or the first resource allocated by the network device is the available first resource. If the uplink resource or the first resource is the available first resource, the terminal device may send the timing advance report to the network device by using the available first resource, to improve a success rate of timing advance reporting and assist network device scheduling.

According to the methods in FIG. 4 and FIG. 5, after the terminal device sends the timing advance report to the network device by using the available first resource, the terminal device may further cancel the to-be-reported timing advance when any one of the following conditions is met, to avoid sending the timing advance report repeatedly, and reduce resources.

Condition 1: The terminal device sends the timing advance report to the network device by using the available first resource.

After the terminal device sends the timing advance report to the network device by using the available first resource, the terminal device may directly cancel the to-be-reported timing advance, to avoid repeated sending caused when the terminal device re-generates the timing advance report and sends the timing advance report to the network device by using the uplink resource when the uplink resource that may be used to send the timing advance report is present subsequently, to reduce resources.

It should be noted that after the terminal device sends the timing advance report to the network device by using the available first resource, the terminal device may cancel the to-be-reported timing advance. Alternatively, it may be described as that when the terminal device sends the timing advance report to the network device by using the available first uplink resource, the terminal device cancels the to-be-reported timing advance, or described as that when the terminal device assembles a MAC CE data packet, the terminal device cancels the to-be-reported timing advance. The MAC CE data packet may include the timing advance report MAC CE and the MAC packet header of the timing advance report MAC CE. Alternatively, it may be described as that when the terminal device considers that the timing advance report is definitely sent before sending the timing advance report, the terminal device cancels the to-be-reported timing advance.

Condition 2: The terminal device receives acknowledgment information from the network device.

The acknowledgment information may be used to acknowledge the timing advance report.

Specifically, when the terminal device sends the timing advance report to the network device by using the available first resource, if the network device receives the timing advance report sent by the terminal device, the network device may send the acknowledgment information to the terminal device, to determine that the timing advance report sent by the terminal device is received. In this case, the terminal device may cancel the to-be-reported timing advance based on the acknowledgment information sent by the network device.

For example, the acknowledgment information may be one or more of the following: an ACK, DCI, a MAC CE, or RRC in a HARQ process.

Condition 3: The terminal device receives third indication information from the network device.

Specifically, because the terminal device sends the timing advance report to the network device to assist the network device in adjusting a scheduling parameter or a scheduling parameter offset, after the terminal device sends the timing advance report to the network device by using the available first resource, the terminal device may wait for the third indication information sent by the network device to determine whether the network device receives the timing advance report sent by the terminal device. If the terminal device receives the third indication information sent by the network device, the terminal device may consider that the network device has received the timing advance report sent by the terminal device. In this case, the terminal device may cancel the to-be-reported timing advance.

The third indication information may indicate to adjust the scheduling parameter or the scheduling parameter offset.

For example, the third indication information may be a differential offset scheduling parameter (or described as differential K_{offset}).

For example, the third indication information may be carried in the MAC CE, the MAC CE may include a differential K_{offset} field, and the differential K_{offset} field may indicate the differential offset scheduling parameter (that is, differential K_{offset}).

Optionally, the terminal device determines, based on the differential offset scheduling parameter, a time interval from receiving downlink scheduling information to sending downlink data, a time interval from receiving downlink data to sending feedback information, or a time interval from receiving uplink scheduling information to sending uplink data. The feedback information may be an ACK or a NACK.

Optionally, a time unit of the time interval may be a slot.

For example, the terminal device determines, based on the differential offset scheduling parameter (that is, differential K_{offset}), the time interval from receiving the downlink scheduling information to sending the downlink data. The terminal device may determine K0' based on K0 and differential K_{offset}. For example, K0'=K0+differential K_{offset}, where K0 is a time interval that is preconfigured by the network device and that is from receiving the downlink scheduling information by the terminal device to sending the downlink data, and K0' is the time interval that is determined by the terminal device and that is from receiving the downlink scheduling information by the terminal device to sending the downlink data.

For another example, the terminal device determines, based on differential K_{offset}, the time interval from receiving the downlink data to sending the feedback information. The terminal device may determine K1' based on K1 and differential K_{offset}. For example, K1'=K1+differential K_{offset}, where K1 is a time interval that is preconfigured by the network device and that is from receiving the downlink data by the terminal device to sending the feedback information, and K1' is the time interval that is determined by the terminal device and that is from receiving the downlink data by the terminal device to sending the feedback information.

For still another example, the terminal device determines, based on differential K_{offset}, the time interval from receiving the uplink scheduling information to sending the uplink data. The terminal device may determine K2' based on K2 and differential K_{offset}. For example, K2'=K2+differential K_{offset}, where K2 is a time interval that is preconfigured by the network device and that is from receiving the uplink scheduling information by the terminal device to sending the uplink data, and K2' is the time interval that is determined by the terminal device and that is from receiving the uplink scheduling information by the terminal device to sending the uplink data.

Optionally, the time interval from receiving the downlink scheduling information to sending the downlink data may alternatively be described as a time interval from receiving a PDCCH to sending the PDSCH. The time interval from receiving the downlink data to sending the feedback information may alternatively be described as a time interval from receiving the PDSCH to sending the ACK/NACK. The time interval from receiving the uplink scheduling information to sending the uplink data may alternatively be described as a time interval from receiving the uplink scheduling information in the DCI to sending the uplink data.

Condition 4: The terminal device receives the third indication information from the network device within preset duration.

For descriptions of the third indication information, refer to the descriptions of the third indication information in Condition 3. Details are not described.

When the terminal device sends the timing advance report to the network device by using the available first resource, if the network device receives the timing advance report sent by the terminal device, the network device may send the third indication information to the terminal device within first duration, and correspondingly, the terminal device may receive the third indication information within the preset duration. If the terminal device receives the third indication information within the preset duration, the terminal device may cancel the to-be-reported timing advance.

The preset duration may be greater than or equal to a sum of the first duration and a round-trip delay. The round-trip delay is a round-trip delay between the terminal device and the network device.

Optionally, the preset duration may be determined by the terminal device, or may be preconfigured by the network device. This is not limited.

Optionally, when the network device receives the timing advance report sent by the terminal device, the network device may start a first timer, and send the third indication information to the terminal device during starting of the first timer. Duration of the first timer is equal to the first duration.

Optionally, when the terminal device sends the timing advance report to the network device by using the available first resource, the terminal device may start a second timer, and receive, during starting of the second timer, the third indication information sent by the network device. Duration of the second timer is equal to the preset duration.

Different from FIG. 4 and FIG. 5 in which the terminal device sends the timing advance report to the network device by using the available first resource, refer to FIG. 6 in which the terminal device may alternatively directly send the timing advance report to the network device by using the uplink resource.

FIG. 6 is a flowchart of a timing advance report sending method according to an embodiment of this application. As shown in FIG. 6, the method may include the following steps.

Step 601: A terminal device sends a timing advance report to a network device by using an uplink resource.

The uplink resource may be an uplink resource associated with a HARQ process configured with a HARQ mode A, may be an uplink resource associated with a HARQ process configured with a HARQ mode B, or may be an uplink resource associated with a HARQ process configured with no HARQ mode.

When the terminal device in connected state triggers timing advance reporting based on a trigger threshold, the terminal device may determine whether an available uplink resource is present. If the available uplink resource is present, the terminal device may send the timing advance report to the network device by using the uplink resource.

Optionally, after performing a logical channel priority process, the terminal device may determine whether the available uplink resource is present.

When the terminal device sends data to the network device, the data may be from different logical channels and MAC CEs. The terminal device may determine, based on priorities of the logical channels and priorities of the MAC CEs, data to be preferentially sent.

A priority of a MAC CE is usually higher than a priority of a logical channel.

For example, the terminal device sends the timing advance report to the network device by using the MAC CE. When the terminal device determines, based on a priority, to preferentially send the MAC CE, the terminal device may determine whether the available uplink resource is present. If the available uplink resource is present, the terminal device may send a timing advance report MAC CE to the network device by using the available uplink resource.

Optionally, when an attribute of the timing advance report MAC CE matches an attribute of the available uplink resource, the terminal device may send the timing advance report MAC CE to the network device by using the available uplink resource.

When the terminal device sends the timing advance report to the network device based on the uplink resource associated with the HARQ process configured with the HARQ mode B, because the HARQ mode B does not support retransmission, after the terminal device sends the timing advance report to the network device by using the uplink resource associated with the HARQ process configured with the HARQ mode B, refer to the following step 602 in which the terminal device may not cancel a to-be-reported timing advance. In this case, when an uplink resource that can be used to transmit the timing advance report is present subsequently, the timing advance report is sent to the network device by using the uplink resource, to improve reliability of timing advance reporting.

Step 602: After the terminal device sends the timing advance report to the network device by using the uplink resource associated with the HARQ process configured with the HARQ mode B, the terminal device may not cancel the to-be-reported timing advance.

Step 602 may alternatively be described as that when the terminal device sends the timing advance report to the network device by using the uplink resource associated with the HARQ process configured with the HARQ mode B, the terminal device does not cancel the to-be-reported timing advance, described as that when the terminal device assembles a MAC CE data packet, the terminal device does not cancel the to-be-reported timing advance, where the MAC CE data packet may include the timing advance report MAC CE and a MAC packet header of the timing advance report MAC CE, or described as that when the terminal device considers that the timing advance report is definitely to be sent before sending the timing advance report, the terminal device does not cancel the to-be-reported timing advance.

The terminal device does not cancel the to-be-reported timing advance for a reason why when an uplink resource that may be used to transmit the timing advance report is present subsequently, the terminal device may continue to send the timing advance report to the network device by using the uplink resource, to improve the reliability of timing advance reporting. Therefore, when the terminal device determines that the network device has received the timing advance report, the terminal device may cancel the to-be-reported timing advance.

For example, when the terminal device sends the timing advance report to the network device by using the uplink resource associated with the HARQ process configured with the HARQ mode B, if the network device receives the timing advance report sent by the terminal device, the network device may send fourth indication information to the terminal device, to indicate the terminal device to cancel the to-be-reported timing advance. The terminal device may cancel the to-be-reported timing advance based on the fourth indication information sent by the network device.

The fourth indication information may indicate to cancel the to-be-reported timing advance.

Optionally, the fourth indication information may be one or more of the following: DCI, a MAC CE, or RRC signaling.

In another example, because the terminal device sends the timing advance report to the network device to assist the network device in adjusting a scheduling parameter or a scheduling parameter offset, after the terminal device sends the timing advance report to the network device by using the uplink resource associated with the HARQ process configured with the HARQ mode B, the terminal device may wait for the fourth indication information sent by the network device to determine whether the network device receives the timing advance report sent by the terminal device. If the terminal device receives the third indication information sent by the network device, the terminal device may consider that the network device has received the timing advance report sent by the terminal device. In this case, the terminal device may cancel the to-be-reported timing advance.

The third indication information may indicate to adjust the scheduling parameter or the scheduling parameter offset.

Optionally, the third indication information may be a differential offset scheduling parameter.

Optionally, when the terminal device sends the timing advance report to the network device by using the uplink resource associated with the HARQ process configured with the HARQ mode B, if the network device receives the timing advance report sent by the terminal device, the network device may send the third indication information to the terminal device within first duration, and correspondingly, the terminal device may receive the third indication information within preset duration. If the terminal device receives the third indication information within the preset duration, the terminal device may cancel the to-be-reported timing advance.

The preset duration may be greater than or equal to a sum of the first duration and a round-trip delay. The round-trip delay is a round-trip delay between the terminal device and the network device.

Optionally, the preset duration may be determined by the terminal device, or may be preconfigured by the network device. This is not limited.

Optionally, when the network device receives the timing advance report sent by the terminal device, the network device may start a first timer, and send the third indication information to the terminal device during starting of the first timer. Duration of the first timer is equal to the first duration.

Optionally, when the terminal device sends the timing advance report to the network device by using an available first resource, the terminal device may start a second timer, and receive, during starting of the second timer, the third indication information sent by the network device. Duration of the second timer is equal to the preset duration.

When the terminal device sends the timing advance report to the network device by using the uplink resource associated with the HARQ process configured with the HARQ mode A or the uplink resource associated with the HARQ process configured with no HARQ mode, because both the HARQ process configured with the HARQ mode A and the HARQ process configured with no HARQ mode support retransmission, when the network device unsuccessfully receives the timing advance report, the terminal device may retransmit the timing advance report to the network device. Therefore, after the terminal device sends the timing advance report to the network device by using the uplink resource associated with the HARQ process configured with the HARQ mode A or the uplink resource associated with the HARQ process configured with no HARQ mode, refer to the following step 603 in which the terminal device may cancel the to-be-reported timing advance, to avoid resource waste caused when the timing advance report is repeatedly sent.

Step 603: After the terminal device sends the timing advance report to the network device by using the uplink resource associated with the HARQ process configured with the HARQ mode A or the uplink resource associated with the HARQ process configured with no HARQ mode, the terminal device cancels the to-be-reported timing advance.

After sending the timing advance report to the network device by using the uplink resource associated with the HARQ process configured with the HARQ mode A or the uplink resource associated with the HARQ process configured with no HARQ mode, the terminal device may directly cancel the to-be-reported timing advance, or may cancel the to-be-reported timing advance when receiving acknowledgment information sent by the network device, or may cancel the to-be-reported timing advance when receiving third indication information sent by the network device, or may cancel the to-be-reported timing advance when receiving, within the preset duration, third indication information sent by the network device.

For descriptions of step 603, refer to the foregoing descriptions of Condition 1 to Condition 4. Details are not described.

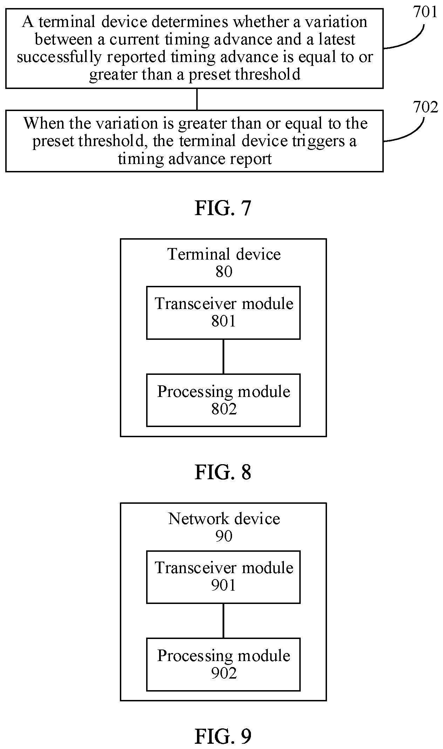

Different from FIG. 4 to FIG. 6 in which the terminal device sends the timing advance report to the network device, refer to the following FIG. 7 in which the terminal device may determine, according to a method shown in FIG. 7, whether to trigger the timing advance report.

It should be noted that the method shown in FIG. 7 may be implemented separately, or may be implemented in combination with any one of the methods in FIG. 4 to FIG. 6. This is not limited.

FIG. 7 is a flowchart of a timing advance report triggering method according to an embodiment of this application. As shown in FIG. 7, the method may include the following steps.

Step 701: A terminal device determines whether a variation between a current timing advance and a latest successfully reported timing advance is equal to or greater than a first threshold.

The latest successfully reported timing advance is determined by the terminal device based on a differential offset scheduling parameter from a network device or a message in a random access procedure.

The terminal device in connected state may send a timing advance report to the network device, or may send a timing advance report to the network device in the random access procedure.

When the terminal device in connected state sends the timing advance report to the network device, because the terminal device sends the timing advance report to the network device to assist the network device in adjusting a scheduling parameter or a scheduling parameter offset (that is, the differential offset scheduling parameter), if the network device receives the timing advance report sent by the terminal device, the network device may send the differential offset scheduling parameter to the terminal device, and the terminal device may determine, based on the differential offset scheduling parameter, that the network device has successfully received the timing advance report sent by the terminal device. The terminal device may determine the latest successfully reported timing advance based on a latest received differential offset scheduling parameter.

When the terminal device sends the timing advance report to the network device in the random access procedure, if the random access procedure is a contention-based random access procedure, the terminal device may include the timing advance report in a random access message 3 (that is, a Msg 3) and send the timing advance report to the network device. If the network device receives the Msg 3 sent by the terminal device, the network device may send a random access message 4 (that is, a Msg 4) to the terminal device. The terminal device may determine, based on the Msg 4, that the network device has successfully received the timing advance report sent by the terminal device. The terminal device may determine, based on a latest received Msg 4, the latest successfully reported timing advance.

When the terminal device sends the timing advance report to the network device in the random access procedure, if the random access procedure is a non-contention-based random access procedure, the terminal device may include the timing advance report in a random access message A (that is, a Msg A) and send the timing advance report to the network device. If the network device receives the Msg A sent by the terminal device, the network device may send a random access message B (that is, a Msg B) to the terminal device. The terminal device may determine, based on the Msg B, that the network device has successfully received the timing advance report sent by the terminal device. The terminal device may determine, based on a latest received Msg B, the latest successfully reported timing advance.

The terminal device may determine the current timing advance based on location information of the terminal device and the network device, and compare the current timing advance with the latest successfully reported timing advance, to determine whether the variation between the current timing advance and the latest successfully reported timing advance is equal to or greater than the first threshold.

The first threshold may be pre-specified in a protocol, or may be pre-configured by the network device. This is not limited.

Step 702: When the variation is greater than or equal to the first threshold, the terminal device triggers the timing advance report.

When the variation is equal to or greater than the first threshold, the terminal device may trigger the timing advance report, and then determine whether an available uplink resource is present. If the available uplink resource is present, the terminal device may generate a timing advance report MAC CE, and send the timing advance report MAC CE to the network device by using the available uplink resource.

The timing advance report MAC CE may include a timing advance (TA) field, and the timing advance field may indicate a timing advance.

The available uplink resource may be an uplink resource that can be used to transmit the timing advance report, or may be any uplink resource that can be used to transmit the timing advance report and that is shown in FIG. 4 to FIG. 6.

Optionally, the terminal device may further cancel a to-be-reported timing advance based on the differential offset scheduling parameter.

For descriptions of the terminal device canceling the to-be-reported timing advance based on the differential offset scheduling parameter, refer to the foregoing related descriptions of the terminal device canceling the to-be-reported timing advance based on the third indication information. Details are not described.

Optionally, the terminal device cancels the to-be-reported timing advance based on the differential offset scheduling parameter when the terminal device receives the differential offset scheduling parameter within preset duration.

For descriptions of the terminal device canceling the to-be-reported timing advance based on the differential offset scheduling parameter when the terminal device receives the differential offset scheduling parameter within the preset duration, refer to the foregoing related descriptions of the terminal device canceling the to-be-reported timing advance based on the third indication information when the terminal device receives the third indication information within the preset duration. Details are not described.

According to the method shown in FIG. 7, when determining whether to trigger the timing advance report this time, the terminal device may determine the latest successfully reported timing advance based on the differential offset scheduling parameter sent by the network device or the message in the random access procedure, and then determine, based on comparison of the variation between the current timing advance and the latest successfully reported timing advance with the first threshold, whether to trigger the timing advance report. This avoids a case that the terminal device compares a variation between an incorrect timing advance and the current timing advance with the first threshold, to improve accuracy of a timing advance report triggering occasion, so that the terminal device can promptly send the timing advance report to the network device, to assist network device scheduling.

The incorrect timing advance may be a timing advance that is unsuccessfully sent previously, or may be a timing advance that has been successfully reported previously. However, the timing advance that has been successfully reported is not the latest successfully reported timing advance.

The embodiments shown in FIG. 4 to FIG. 7 may be implemented separately, or may be implemented in combination with each other. This is not limited.

The solutions provided in embodiments of this application are mainly described above from a perspective of interaction between the devices. It may be understood that to implement the foregoing functions, each device includes a corresponding hardware structure and/or a corresponding software module for performing each function. A person of ordinary skill in the art should easily be aware that in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, module division is an example, and is merely a logical function division. During actual implementation, another division manner may be used.

When each functional module is obtained through division based on each corresponding function, FIG. 8 shows a terminal device 80. The terminal device 80 may perform actions performed by the terminal device in FIG. 4 to FIG. 7.

The terminal device 80 may include a transceiver module 801 and a processing module 802. For example, the terminal device 80 may be a terminal device, or may be a chip used in the terminal device or another combined component or part that has a function of the foregoing terminal device. When the terminal device 80 is the terminal device, the transceiver module 801 may be a transceiver, where the transceiver may include an antenna, a radio frequency circuit, and the like; and the processing module 802 may be a processor (or a processing circuit), for example, a baseband processor, where the baseband processor may include one or more CPUs. When the terminal device 80 is the part that has the function of the foregoing terminal device, the transceiver module 801 may be a radio frequency unit; and the processing module 802 may be a processor (or a processing circuit), for example, a baseband processor. When the terminal device 80 is a chip system, the transceiver module 801 may be an input/output interface of a chip (for example, a baseband chip); and the processing module 802 may be a processor (or a processing circuit) of the chip system, and may include one or more central processing units. It should be understood that the transceiver module 801 in this embodiment of this application may be implemented by the transceiver or a transceiver-related circuit component; and the processing module 802 may be implemented by the processor or a processor-related circuit component (or referred to as the processing circuit).

For example, the transceiver module 801 may be configured to perform all sending and receiving operations performed by the terminal device in the embodiments shown in FIG. 4 and FIG. 7, and/or configured to support another process of the technology described in this specification. The processing module 802 may be configured to perform all operations other than sending and receiving operations performed by the terminal device in the embodiments shown in FIG. 4 and FIG. 7, and/or configured to support another process of the technology described in this specification.

In another possible implementation, the transceiver module 801 in FIG. 8 may be replaced with a transceiver, and a function of the transceiver module 801 may be integrated into the transceiver. The processing module 802 may be replaced with a processor, and a function of the processing module 802 may be integrated into the processor. Further, the terminal device 80 shown in FIG. 8 may further include a memory.

When each functional module is obtained through division based on each corresponding function, FIG. 9 shows a network device 90. The network device 90 may perform actions performed by the network device in FIG. 4 to FIG. 7.

The network device 90 may include a transceiver module 901 and a processing module 902. For example, the network device 90 may be a network device, or may be a chip used in a network device or another combined component or part that has a function of the network device. When the network device 90 is the network device, the transceiver module 901 may be a transceiver, where the transceiver may include an antenna, a radio frequency circuit, and the like; and the processing module 902 may be a processor (or a processing circuit), for example, a baseband processor, where the baseband processor may include one or more CPUs. When the network device 90 is the part that has the function of the foregoing network device, the transceiver module 901 may be a radio frequency unit; and the processing module 902 may be a processor (or a processing circuit), for example, a baseband processor. When the network device 90 is a chip system, the transceiver module 901 may be an input/output interface of a chip (for example, a baseband chip); and the processing module 902 may be a processor (or a processing circuit) of the chip system, and may include one or more central processing units. It should be understood that the transceiver module 901 in this embodiment of this application may be implemented by the transceiver or a transceiver-related circuit component; and the processing module 902 may be implemented by the processor or a processor-related circuit component (or referred to as the processing circuit).

For example, the transceiver module 901 may be configured to perform all sending and receiving operations performed by the network device in the embodiments shown in FIG. 4 and FIG. 7, and/or configured to support another process of the technology described in this specification. The processing module 902 may be configured to perform all operations other than sending and receiving operations performed by the network device in the embodiments shown in FIG. 4 and FIG. 7, and/or configured to support another process of the technology described in this specification.

In another possible implementation, the transceiver module 901 in FIG. 9 may be replaced with a transceiver, and a function of the transceiver module 901 may be integrated into the transceiver. The processing module 902 may be replaced with a processor, and a function of the processing module 902 may be integrated into the processor. Further, the network device 90 shown in FIG. 9 may further include a memory.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or a part of procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit in the terminal (including a data transmit end and/or a data receive end) in any one of the foregoing embodiments, for example, a hard disk drive or memory of the terminal. The computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the foregoing computer program and other programs and data that are required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. In addition, the terms "including", "having", and any other variants thereof are intended to cover a non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

It should be understood that in this application, "at least one (item)" means one or more, "a plurality of" means two or more than two, "at least two (items)" means two, three, or more than three, and "and/or" is used to describe an association relationship between associated objects, and represents that there may be three relationships. For example, "A and/or B" may represent that only A exists, only B exists, and both A and B exist, where A and B may be singular or plural. The character "/" usually represents an "or" relationship between the associated objects. "At least one of the following items (pieces)" or a similar expression thereof means any combination of these items, including a singular item (piece) or any combination of plural items (pieces). For example, at least one of a, b, or c may represent a, b, c, "a and b", "a and c", "b and c", or "a, b, and c", where a, b, and c may be singular or plural.

The foregoing descriptions about implementations allow a person skilled in the art to understand that for the purpose of convenient and brief description, division of the foregoing functional modules is used as an example for description. In actual application, the foregoing functions can be allocated to different modules and implemented based on a requirement, that is, an inner structure of an apparatus is divided into different functional modules to implement all or a part of the functions described above.

In the several embodiments provided in this application, it should be understood that the disclosed apparatus and method may be implemented in other manners. For example, the apparatus embodiments described above are merely examples. For example, division into the modules or units is merely logical function division and may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may be one or more physical units, in other words, may be located in one place, or may be distributed on a plurality of different places. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially or all or a part of the technical solutions may be implemented in the form of a software product. The software product is stored in a memory medium and includes several instructions for instructing a device (which may be a single-chip microcomputer, a chip, or the like) or a processor (processor) to perform all or a part of the steps of the methods described in embodiments of this application. The foregoing storage medium includes any medium that can store program code, such as a USB flash drive, a removable hard disk drive, a ROM, a RAM, a magnetic disk, or an optical disc.

## Claims

1. A timing advance report sending method, comprising:
determining, by a terminal device, whether an available first resource is present, wherein the available first resource is associated with a hybrid automatic repeat request HARQ process configured with a HARQ mode A, and the HARQ mode A supports retransmission; and
when the available first resource is present, sending, by the terminal device, a timing advance report to a network device by using the available first resource.

2. The method according to claim 1, wherein
the available first resource is greater than or equal to a resource occupied by the timing advance report and a packet header of the timing advance report.

3. The method according to claim 1 or 2, wherein the terminal device determines that the available first resource is absent in any one of the following cases:
an available uplink resource is absent;
an uplink resource associated with the HARQ process configured with the HARQ mode A is absent; or
an uplink resource associated with the HARQ process configured with the HARQ mode A is present, but the uplink resource is less than the resource occupied by the timing advance report and the packet header of the timing advance report.

4. The method according to any one of claims 1 to 3, wherein the method further comprises:
when the available first resource is absent, sending, by the terminal device, first indication information to the network device, wherein the first indication information is used to request an uplink resource, the first indication information indicates that a to-be-reported timing advance is present, or the first indication information is used to request an uplink resource associated with the HARQ process configured with the HARQ mode A.

5. The method according to claim 4, wherein the sending, by the terminal device, first indication information to the network device comprises:
when the available first resource is absent, and a function of sending the first indication information is configured as enabled, sending, by the terminal device, the first indication information to the network device.

6. The method according to claim 4 or 5, wherein
the first indication information is a scheduling request or physical uplink control channel PUCCH signaling.

7. The method according to any one of claims 4 to 6, wherein the method further comprises:
when the available first resource is absent, sending, by the terminal device, second indication information to the network device, wherein the second indication information indicates a reason why the available first resource is absent; and the reason why the available first resource is absent comprises one or more of the following: an available uplink resource is absent, an uplink resource associated with the HARQ process configured with the HARQ mode A is absent, or an uplink resource associated with the HARQ process configured with the HARQ mode A is present, but the uplink resource is less than the resource occupied by the timing advance report and the packet header of the timing advance report.

8. The method according to any one of claims 4 to 7, wherein the method further comprises:
obtaining, by the terminal device, the available first resource allocated by the network device; and
sending, by the terminal device, the timing advance report to the network device by using the available first resource.

9. The method according to any one of claims 1 to 8, wherein after the sending, by the terminal device, the timing advance report to the network device by using the available first resource, the terminal device cancels the to-be-reported timing advance when any one of the following conditions is met:
the terminal device sends the timing advance report to the network device by using the available first resource;
the terminal device receives acknowledgment information from the network device, wherein the acknowledgment information is used to acknowledge the timing advance report;
the terminal device receives third indication information from the network device, wherein the third indication information indicates to adjust a scheduling parameter; or
the terminal device receives the third indication information from the network device within preset duration.

10. A timing advance report sending method, comprising:
receiving, by a network device, first indication information from a terminal device, wherein the first indication information indicates that a to-be-reported timing advance is present; and
sending, by the network device to the terminal device, information indicating a first resource, wherein the first resource is associated with a hybrid automatic repeat request HARQ process configured with a HARQ mode A, and the HARQ mode A supports retransmission.

11. The method according to claim 10, wherein the method further comprises:
receiving, by the network device, a timing advance report from the terminal device by using the first resource.

12. The method according to claim 10 or 11, wherein
the first resource is greater than or equal to a resource occupied by the timing advance report and a packet header of the timing advance report.

13. The method according to any one of claims 10 to 12, wherein
the first indication information is a scheduling request or physical uplink control channel PUCCH signaling.

14. The method according to any one of claims 10 to 13, wherein the method further comprises:
receiving, by the network device, second indication information from the terminal device, wherein the second indication information indicates a reason why an available first resource is absent; and the reason why the available first resource is absent comprises one or more of the following: an available uplink resource is absent, an uplink resource associated with the HARQ process configured with the HARQ mode A is absent, or an uplink resource associated with the HARQ process configured with the HARQ mode A is present, but the uplink resource is less than the resource occupied by the timing advance report and the packet header of the timing advance report.

15. A timing advance report sending method, comprising:
sending, by a terminal device, a timing advance report to a network device by using an uplink resource; and
when a hybrid automatic repeat request HARQ process associated with the uplink resource is configured with a HARQ mode B, after the terminal device sends the timing advance report, skipping canceling a to-be-reported timing advance, wherein the HARQ mode B does not support retransmission.

16. The method according to claim 15, wherein the method further comprises:
when the HARQ process associated with the uplink resource is configured with a HARQ mode A, after the terminal device sends the timing advance report, canceling the to-be-reported timing advance, wherein the HARQ mode A supports retransmission.

17. The method according to claim 15 or 16, wherein when the HARQ process associated with the uplink resource is configured with the HARQ mode B, the method further comprises:
receiving, by the terminal device, fourth indication information from the network device, wherein the fourth indication information indicates to cancel the to-be-reported timing advance; and
canceling, by the terminal device, the to-be-reported timing advance based on the fourth indication information.

18. The method according to claim 17, wherein
the fourth indication information is one or more of the following: downlink control information DCI, a media access control control element MAC CE, or radio resource control RRC signaling.

19. The method according to claim 16, wherein when the HARQ process associated with the uplink resource is configured with the HARQ mode A, the terminal device cancels the to-be-reported timing advance when any one of the following conditions is met:
the terminal device sends the timing advance report to the network device by using the uplink resource; or
the terminal device receives acknowledgment information from the network device, wherein the acknowledgment information is used to acknowledge the timing advance report.

20. The method according to any one of claims 15 to 19, wherein the method further comprises:
receiving, by the terminal device, third indication information from the network device, and canceling the to-be-reported timing advance based on the third indication information; or
receiving, by the terminal device, the third indication information from the network device within preset duration, and canceling the to-be-reported timing advance based on the third indication information, wherein
the third indication information indicates to adjust a scheduling parameter.

21. A timing advance report sending method, comprising:
receiving, by a network device, a timing advance report from a terminal device by using an uplink resource; and
when a hybrid automatic repeat request HARQ process associated with the uplink resource is configured with a HARQ mode A, determining, by the network device, that the terminal device cancels a to-be-reported timing advance, wherein the HARQ mode A supports retransmission; or
when the HARQ process associated with the uplink resource is configured with a HARQ mode B, determining, by the network device, that the terminal device does not cancel the to-be-reported timing advance, wherein the HARQ mode B does not support retransmission.

22. The method according to claim 21, wherein the method further comprises:
when the HARQ process associated with the uplink resource is configured with the HARQ mode B, sending, by the network device, fourth indication information to the terminal device, wherein the fourth indication information indicates the terminal device to cancel the to-be-reported timing advance.

23. A communication apparatus, comprising:
a processing module, configured to determine whether an available first resource is present, wherein the available first resource is associated with a hybrid automatic repeat request HARQ process configured with a HARQ mode A, and the HARQ mode A supports retransmission; and
a transceiver module, configured to: when the available first resource is present, send a timing advance report to a network device by using the available first resource.

24. A communication apparatus, comprising:
a transceiver module, configured to receive first indication information from a terminal device, wherein the first indication information indicates that a to-be-reported timing advance is present, wherein
the transceiver module is further configured to send, to the terminal device, information indicating a first resource, wherein the first resource is associated with a hybrid automatic repeat request HARQ process configured with a HARQ mode A, and the HARQ mode A supports retransmission.

25. A communication apparatus, comprising:
a transceiver module, configured to send a timing advance report to a network device by using an uplink resource associated with a hybrid automatic repeat request HARQ process; and
a processing module, configured to: when the HARQ process is configured with a HARQ mode B, after the transceiver module sends the timing advance report, skip canceling a to-be-reported timing advance, wherein the HARQ mode B does not support retransmission.

26. A communication apparatus, comprising:
a transceiver module, configured to receive a timing advance report from a terminal device by using an uplink resource associated with a hybrid automatic repeat request HARQ process; and
a processing module, configured to: when the HARQ process is configured with a HARQ mode A, determine that the terminal device cancels a to-be-reported timing advance, wherein the HARQ mode A supports retransmission, wherein
the processing module is further configured to: when the HARQ process is configured with a HARQ mode B, determine that the terminal device does not cancel the to-be-reported timing advance, wherein the HARQ mode B does not support retransmission.

27. A communication apparatus, wherein the communication apparatus comprises a processor, wherein the processor is configured to run a computer program or instructions, to enable the communication apparatus to perform the timing advance report sending method according to any one of claims 1 to 9 or the timing advance report sending method according to any one of claims 15 to 20.

28. A communication apparatus, wherein the communication apparatus comprises a processor, wherein the processor is configured to run a computer program or instructions, to enable the communication apparatus to perform the timing advance report sending method according to any one of claims 10 to 14 or the timing advance report sending method according to claim 21 or 22.

29. A computer-readable storage medium, wherein the computer-readable storage medium stores computer instructions or a program, and when the computer instructions or the program is run on a computer, the timing advance report sending method according to any one of claims 1 to 9 or the timing advance report sending method according to any one of claims 15 to 20 is performed.

30. A computer-readable storage medium, wherein the computer-readable storage medium stores computer instructions or a program, and when the computer instructions or the program is run on a computer, the timing advance report sending method according to any one of claims 10 to 14 or the timing advance report sending method according to claim 21 or 22 is performed.

31. A computer program product, wherein the computer program product comprises computer instructions, wherein when a part or all of the computer instructions are run on a computer, the timing advance report sending method according to any one of claims 1 to 9 or the timing advance report sending method according to any one of claims 15 to 20 is performed.

32. A computer program product, wherein the computer program product comprises computer instructions, wherein when a part or all of the computer instructions are run on a computer, the timing advance report sending method according to any one of claims 10 to 14 or the timing advance report sending method according to claim 21 or 22 is performed.
